# EUROPÄISCHE PATENTANMELDUNG

(11) **EP 1 768 342 A1**
(43) Veröffentlichungstag der Anmeldung: **28.03.2007**
(21) Anmeldenummer: 06121071.2
(22) Anmeldetag: 21.09.2006
(51) Int. Cl.: H04L 29/06

(54) **Netzwerkkomponente, Kommunikationsnetzwerk und Verfahren zur Bereitstellung einer Datenverbindung**

(30) Priorität: 21.09.2005 DE 102005046462
(71) Anmelder: Engel Technologieberatung Entwicklung/Verkauf von Soft- und Hardware KG, 14532 Stahnsdorf (DE)
(72) Erfinder: Engel, Christian, 14532, Stahnsdorf (DE); Berndes, Thomas, 14532, Stahnsdorf (DE); Gehring, Andreas, 14163, Berlin (DE)
(74) Vertreter: Wablat, Wolfgang

(57) **Zusammenfassung**

Die vorliegende Erfindung betrifft eine Netzwerkkomponente (11-16) für ein Kommunikationsnetzwerk (1), bei welchem eine Mehrzahl von Kommunikationsschnittstellen (31-37) zum gegenseitigen Datenaustausch über ein Übertragungsnetzwerk (20) verbunden ist, wobei die Netzwerkkomponente (11-16) zwischen wenigstens einer zugeordneten Kommunikationsschnittstelle (31-37) und dem Übertragungsnetzwerk (20) anordbar ist. Die erfindungsgemäße Netzwerkkomponente (11-16) weist eine erste Speichereinrichtung (41) zum Speichern von wenigstens einem vorgegebenen Kodierschlüssel (K1, K2, K3), einen Entschlüsseler (51) zum Entschlüsseln von über das Übertragungsnetzwerk (20) empfangenen verschlüsselten Daten unter Verwendung des gespeicherten wenigstens einen Kodierschlüssels (K1, K2, K3), sowie einen Datenselektor (52) zum wahlweisen Übertragen von Daten zwischen dem Übertragungsnetzwerk (20) und der wenigstens einen zugeordneten Kommunikationsschnittstelle (31-37), auf. Dabei ist der Datenselektor (52) ausgebildet, eine Übertragung von über das Übertragungsnetzwerk (20) empfangenen verschlüsselten Daten an die wenigstens eine zugeordnete Kommunikationsschnittstelle (31-37) automatisch zu verhindern, wenn die verschlüsselten Daten durch den Entschlüsseler (51) nicht mittels des wenigstens einen Kodierschlüssels (K1, K2, K3) entschlüsselbar sind. Weiter betrifft die vorliegende Erfindung ein entsprechendes Kommunikationsnetzwerk sowie ein entsprechendes Verfahren zur Bereitstellung einer Datenverbindung zwischen wenigstens zwei über ein Übertragungsnetzwerk miteinander verbindbaren Kommunikationsschnittstellen.

## Beschreibung

Die vorliegende Erfindung betrifft eine Netzwerkkomponente für ein Kommunikationsnetzwerk, bei welchem eine Mehrzahl von Kommunikationsschnittstellen zum gegenseitigen Datenaustausch über ein Übertragungsnetzwerk verbunden ist, wobei die Netzwerkkomponente zwischen wenigstens einer zugeordneten Kommunikationsschnittstelle und dem Übertragungsnetzwerk anordbar ist.

Weiter betrifft die vorliegende Erfindung ein entsprechendes Kommunikationsnetzwerk, welches ein einen Datenaustausch ermöglichendes Übertragungsnetzwerk sowie eine Mehrzahl von mit dem Übertragungsnetzwerk verbundenen Kommunikationsschnittstellen aufweist, wobei die Kommunikationsschnittstellen zum Datenaustausch über das Übertragungsnetzwerk ausgebildet sind.

Schließlich betrifft die vorliegende Erfindung ein Verfahren zur Bereitstellung einer Datenverbindung zwischen wenigstens zwei über ein Übertragungsnetzwerk miteinander verbindbaren Kommunikationsschnittstellen, wobei zwischen wenigstens zwei der Kommunikationsschnittstellen und dem Übertragungsnetzwerk jeweils eine Netzwerkkomponente vorgesehen ist.

Derartige Kommunikationsnetzwerke können auf verschiedenen Übertragungsnetzwerken basieren. Im einfachsten Fall handelt es sich bei dem Übertragungsnetzwerk um eine Datenverbindung über ein digitales Kommunikationsnetzwerk wie beispielsweise einem ISDN-Netzwerk. In diesem Falle handelt es sich bei den Kommunikationsschnittstellen beispielsweise um jeweils ein Modem eines Kommunikationsteilnehmers oder um einen Server eines Netzwerkproviders.

Alternativ kann es sich bei dem Übertragungsnetzwerk beispielsweise auch um ein lokales Datennetzwerk auf Ethernetbasis oder ein globales Datennetzwerk auf Internetprotokoll-Basis handeln. In diesem Falle handelt es sich bei den Kommunikationsschnittstellen beispielsweise um jeweils eine mit einem Personalcomputer verbundene Netzwerkkarte.

Die vorliegende Erfindung ist jedoch nicht auf diese Beispiele beschränkt. Vielmehr kann für die Zwecke der vorliegenden Erfindung jedes beliebige Datennetzwerk oder jedes andere Kommunikationsnetzwerk als Übertragungsnetzwerk verwendet werden, welches den Austausch von digitalen Daten zwischen wenigstens zwei Kommunikationsschnittstellen und damit wenigstens zwei Kommunikationsteilnehmern ermöglicht.

Bei derartigen Übertragungsnetzwerken werden einzelne Verbindungen zwischen Kommunikationsschnittstellen von Kommunikationsteilnehmern üblicherweise dadurch aufgebaut, dass jeder Kommunikationsschnittstelle eine individuelle Kommunikationsadresse zugewiesen ist. Diese Kommunikationsadresse ist entweder hardwaremäßig in der Kommunikationsschnittstelle vorgegeben oder wird von dem Übertragungsnetzwerk dynamisch vergeben.

In einem Übertragungsnetzwerk mit mehreren Kommunikationsteilnehmern besteht immer die Gefahr, dass zwischen den Kommunikationsteilnehmern über das Übertragungsnetzwerk übermittelte Daten durch einen Unberechtigten abgehört oder abgefangen werden. Weiter besteht die Gefahr, dass ein Unberechtigter versucht, auf mit den von den Kommunikationsteilnehmern verwendeten Kommunikationsschnittstellen und mit diesen ggf. verbundene Personalcomputer, Server oder ähnliches zuzugreifen.

Zur Lösung dieser Probleme ist es zum einen bekannt, Daten zwischen zwei Kommunikationsteilnehmern verschlüsselt zu übertragen. Hierfür müssen die beiden Kommunikationsteilnehmer, zwischen denen die Datenübertragung erfolgen soll, zunächst einen zu verwendenden Kodierschlüssel austauschen. Anschließend müssen die Daten von dem sendenden Kommunikationsteilnehmer unter Verwendung des Kodierschlüssels verschlüsselt und über das Übertragungsnetzwerk versandt werden. Von dem empfangenden Kommunikationsteilnehmer empfangene Daten müssen von diesem wiederum unter Verwendung des Kodierschlüssels entschlüsselt werden.

Unter einem Kodierschlüssel werden dabei Daten in Form von Bytes verstanden werden, die von einem Verschlüsselungsalgorithmus bzw. einem Entschlüsselungsalgorithmus verwendet werden, um Daten zu verschlüsseln bzw. zu entschlüsseln. Bei den verwendeten Kodierschlüsseln kann es sich sowohl um symmetrische als auch um asymmetrische Kodierschlüssel handeln.

Dieser Lösungsansatz weist den Nachteil auf, dass für die Verschlüsselung und Entschlüsselung jeweils ein manueller Eingriff eines Benutzers notwendig ist. Weiter ist der Austausch des verwendeten Kodierschlüssels in der Praxis schwierig, da dieser häufig auch über das Übertragungsnetzwerk erfolgt und somit die Gefahr besteht, dass der Kodierschlüssel von einem Unberechtigten abgefangen oder abgehört wird. Weiter ist für das Verschlüsseln und Entschlüsseln der Daten eine separate Software erforderlich, die häufig nur umständlich zu bedienen ist.

In der Folge haben insbesondere weniger versierte Benutzer in der Praxis erhebliche Schwierigkeiten, über ein Übertragungsnetzwerk verschlüsselte Daten auszutauschen. Ferner bietet die Verschlüsselung der Daten alleine keinerlei Schutz gegen einen Angriff über das Übertragungsnetzwerk, da von der Kommunikationsschnittstelle auch unverschlüsselte Daten empfangen werden.

Weiter ist es zur Lösung der vorstehenden Probleme bekannt, zwischen Kommunikationsschnittstellen der einzelnen Kommunikationsteilnehmer und dem Übertragungsnetzwerk jeweils eine sogenannte "Firewall" vorzusehen. Die Firewall ist eine Einrichtung, welche die Kommunikationsschnittstellen gegen das Übertragungsnetzwerk abschottet und so einen Zugriff von außen auf die Kommunikationsschnittstelle verhindert. Hierzu analysiert und prüft die Firewall von dem Übertragungsnetzwerk empfangene Daten, bevor die Daten an die jeweilige Kommunikationsschnittstelle weitergeleitet werden. Weiter ist die Firewall häufig dafür ausgebildet, den Zugriff eines Kommunikationsteilnehmers auf das Übertragungsnetzwerk zu beschränken. Hierfür identifiziert die Firewall in empfangenen Daten unter anderem eine sendende Kommunikationsadresse einer sendenden Kommunikationsschnittstelle und beurteilt, ob ein Datenaustausch mit dieser Kommunikationsschnittstelle möglich sein soll. Ein Zugriff auf als unsicher eingestufte Kommunikationsschnittstellen wird dann von der Firewall automatisch unterbunden.

Eine derartige Firewall ist in der deutschen Patentanmeldung DE 10340181 beschrieben.

Nachteilig an einer derartigen Firewall ist, dass die Installation einer Firewall sehr aufwendig ist. Der Grund ist, dass die Firewall so einzurichten ist, dass einerseits eine zuverlässige Datenübertragung zwischen Kommunikationsschnittstellen des Übertragungsnetzwerks möglich ist und andererseits eine ausreichende Sicherheit gewährleistet wird. Weiter kann die Verwendung einer Firewall nicht verhindern, dass zwischen Kommunikationsschnittstellen übertragene Daten in dem Übertragungsnetzwerk abgehört oder abgefangen werden.

Ausgehend hiervon ist es Aufgabe der vorliegenden Erfindung, eine Netzwerkkomponente für ein Kommunikationsnetzwerk, ein Kommunikationsnetzwerk und ein Verfahren zur Bereitstellung einer Datenverbindung zur Verfügung zu stellen, welche auf besonders einfache und zuverlässige Weise ohne Benutzereingriff einen sicheren Datenaustausch zwischen wenigstens zwei über ein Übertragungsnetzwerk miteinander verbundenen Kommunikationsschnittstellen ermöglichen.

Weiter ist es Aufgabe der vorliegenden Erfindung, einen Zugriff eines Unberechtigten auf eine mit dem Übertragungsnetzwerk verbundene Kommunikationsschnittstelle über das Übertragungsnetzwerk zu erschweren.

Die vorstehenden Aufgaben werden bei einer Netzwerkkomponente für ein Kommunikationsnetzwerk mit den Merkmalen des Oberbegriffs des unabhängigen Anspruchs 1 durch die Merkmale des kennzeichnenden Teils des unabhängigen Anspruchs 1 gelöst.

Weiter werden die vorstehenden Aufgaben durch ein Kommunikationsnetzwerk mit den Merkmalen des unabhängigen Anspruchs 39 und ein Verfahren zur Bereitstellung einer Datenverbindung mit den Merkmalen des unabhängigen Anspruchs 46 gelöst.

Vorteilhafte Weiterbildungen finden sich in den jeweiligen Unteransprüchen.

Gemäß eines ersten Aspekts betrifft die vorliegende Erfindung eine Netzwerkkomponente für ein Kommunikationsnetzwerk, bei welchem eine Mehrzahl von Kommunikationsschnittstellen zum gegenseitigen Datenaustausch über ein Übertragungsnetzwerk verbunden ist, wobei die Netzwerkkomponente zwischen wenigstens einer zugeordneten Kommunikationsschnittstelle und dem Übertragungsnetzwerk anordbar ist. Erfindungsgemäß weist die Netzwerkkomponente eine erste Speichereinrichtung zum Speichern von wenigstens einem vorgegebenen Kodierschlüssel, einen Entschlüsseler zum Entschlüsseln von über das Übertragungsnetzwerk empfangenen verschlüsselten Daten unter Verwendung des gespeicherten wenigstens einen Kodierschlüssels, sowie einen Datenselektor zum wahlweisen Übertragen von Daten zwischen dem Übertragungsnetzwerk und der wenigstens einen zugeordneten Kommunikationsschnittstelle auf. Dabei ist der Datenselektor ausgebildet, eine Übertragung von über das Übertragungsnetzwerk empfangenen verschlüsselten Daten an die wenigstens eine zugeordnete Kommunikationsschnittstelle automatisch zu verhindern, wenn die verschlüsselten Daten durch den Entschlüsseler nicht mittels des wenigstens einen Kodierschlüssels entschlüsselbar sind.

Durch das Vorsehen der erfindungsgemäßen Netzwerkkomponente zwischen einer jeweiligen zugeordneten Kommunikationsschnittstelle und dem Übertragungsnetzwerk wird automatisch sichergestellt, dass nur solche Daten zu der Kommunikationsschnittstelle weitergeleitet werden, welche mittels eines vorgegebenen, in der Netzwerkkomponente gespeicherten Kodierschlüssels entschlüsselt werden können. Hierfür kann die erfindungsgemäße Netzwerkkomponente im einfachsten Falle ausgebildet sein, um beim Erhalt von verschlüsselten Daten eine Entschlüsselung mit allen in der ersten Speichereinrichtung der Netzwerkkomponente gespeicherten vorgegebenen Kodierschlüsseln zu versuchen, um festzustellen, ob die Daten entschlüsselbar sind. Ersichtlich kommt eine Datenübertragung erfindungsgemäß nur zustande, wenn eine sendende Kommunikationsschnittstelle die Daten vor dem Übertragen über das Übertragungsnetzwerk mittels eines Kodierschlüssels verschlüsselt, der auch in der ersten Speichereinrichtung der Netzwerkkomponente, die der empfangenden adressierten Kommunikationsschnittstelle zugeordnet ist, gespeichert ist.

Die Entscheidung darüber, zwischen welchen der mit dem Übertragungsnetzwerk verbundenen Kommunikationsschnittstellen ein Datenaustausch möglich ist, hängt alleine davon ab, welche vorgegebenen Kodierschlüssel in der ersten Speichereinrichtung der Netzwerkkomponente gespeichert sind und welche Kodierschlüssel die übrigen mit dem Übertragungsnetzwerk verbundenen Kommunikationsschnittstellen zum Verschlüsseln der zu übertragenden Daten verwenden. Da die Netzwerkkomponente automatisch arbeitet, ist es lediglich erforderlich, die Netzwerkkomponente zwischen der jeweiligen zugeordneten Kommunikationsschnittstelle und dem Übertragungsnetzwerk anzuordnen. Eine Konfiguration durch einen Benutzer ist ebenso wie ein sonstiger Benutzereingriff nicht erforderlich.

Gemäß einer bevorzugten Ausführungsform ist der Datenselektor ausgebildet, über das Übertragungsnetzwerk empfangene verschlüsselte Daten nach einer Entschlüsselung durch den Entschlüsseler mittels des wenigstens einen Kodierschlüssels automatisch an die wenigstens eine zugeordnete Kommunikationsschnittstelle weiterzuleiten.

Dabei kann die Netzwerkkomponente eine erste Schnittstelle zur Verbindung der Netzwerkkomponente mit der wenigstens einen zugeordneten Kommunikationsschnittstelle und eine zweite Schnittstelle zum Verbinden der Netzwerkkomponente mit dem Übertragungsnetzwerk aufweisen, wobei die erste Schnittstelle mit dem Datenselektor und die zweite Schnittstelle mit dem Entschlüsseler verbunden ist.

Somit ist die Netzwerkkomponente vorzugsweise eine mit der zugeordneten Kommunikationsschnittstelle und dem Übertragungsnetzwerk über Schnittstellen lösbar verbindbare Einrichtung.

Dies erleichtert einen flexiblen Aufbau eines das Übertragungsnetzwerk überlagernden Netzwerks durch das Vorsehen der erfindungsgemäßen Netzwerkkomponente erheblich.

Ferner kann der Entschlüsseler ausgebildet sein, um in über das Übertragungsnetzwerk empfangenen verschlüsselten Daten automatisch eine Schlüsselinformation zu identifizieren, welche einen für die Verschlüsselung verwendeten Kodierschlüssel kennzeichnet.

In der Folge ist es für die Entschlüsselung der empfangenen verschlüsselten Daten nicht erforderlich, alle in der ersten Speichereinrichtung gespeicherten vorgegebenen Kodierschlüssel auszuprobieren. Vielmehr kann gezielt ein für die Entschlüsselung der verschlüsselten Daten geeigneter Kodierschlüssel verwendet werden. Eine derartige Schlüsselinformation kann in den empfangenen verschlüsselten Daten entweder explizit oder implizit enthalten sein. Beispielsweise ist es häufig durch Analyse von verschlüsselten Daten möglich, Rückschlüsse auf ein verwendetes Verschlüsselungsverfahren und einen verwendeten Kodierschlüssel zu ziehen. Die Schlüsselinformation kann den verschlüsselten Daten jedoch auch bewusst beigefügt sein, um eine Identifizierung eines für die Verschlüsselung verwendeten Kodierschlüssels zu erleichtern.

In diesem Fall kann es vorteilhaft sein, wenn die Schlüsselinformation eine Schlüsselkennung ist, welche den über das Übertragungsnetzwerk empfangenen verschlüsselten Daten unverschlüsselt beigefügt ist.

In der Folge ist die Identifizierung der Schlüsselinformation besonders schnell, einfach und zuverlässig möglich.

Den Kommunikationsschnittstellen des Übertragungsnetzwerks kann zur Adressierung im Rahmen des gegenseitigen Datenaustauschs jeweils eine Kommunikationsadresse zugeordnet sein. Dann ist die Schlüsselinformation von den zur Adressierung einer jeweiligen Kommunikationsschnittstellen verwendeten Kommunikationsadresse bevorzugt verschieden.

Somit ist die Schlüsselinformation von dem verwendeten Übertragungsnetzwerk unabhängig und braucht bei einer Änderung des Übertragungsnetzwerkes oder einer Änderung der in dem Übertragungsnetzwerk verwendeten Kommunikationsadressen nicht angepasst zu werden. Hierdurch ist die erfindungsgemäße Netzwerkkomponente ohne Benutzereingriff besonders flexibel einsetzbar.

Gemäß einer bevorzugten Ausführungsform weist die Netzwerkkomponente weiter einen Verschlüsseler zum Verschlüsseln von von der zugeordneten Kommunikationsschnittstelle empfangenen Daten unter Verwendung des gespeicherten wenigstens einen Kodierschlüssels auf. Dabei ist der Datenselektor ausgebildet, von der zugeordneten Kommunikationsschnittstelle empfangene Daten erst nach einer Verschlüsselung durch den Verschlüsseler mittels des wenigstens einen Kodierschlüssels automatisch an das Übertragungsnetzwerk auszugeben.

Somit erlaubt die erfindungsgemäße Netzwerkkomponente einen bidirektionalen Datenaustausch einer der Netzwerkkomponente zugeordneten Kommunikationsschnittstelle mit einer weiteren, über das Übertragungsnetzwerk verbundenen Kommunikationsschnittstelle, der ebenfalls eine erfindungsgemäße Netzwerkkomponente zugeordnet ist. Dabei stellt die jeweilige erfindungsgemäße Netzwerkkomponente durch die Verschlüsselung sicher, dass die gesendeten Daten in dem Übertragungsnetzwerk nicht von einem Unberechtigten abgehört werden können. Da die Verschlüsselung automatisch durch den Verschlüsseler erfolgt, kommt die erfindungsgemäße Netzwerkkomponente ohne Benutzereingriff aus. Dabei kann der Verschlüsseler weiter ausgebildet sein, den zu verschlüsselnden Daten vor einer Verschlüsselung Zufallsdaten hinzuzufügen, um den verwendeten Kodierschlüssel in den verschlüsselten Daten zu verschleiern.

Dann kann es weiter vorteilhaft sein, wenn in der ersten Speichereinrichtung zu dem wenigstens einen vorgegebenen Kodierschlüssel eine den Kodierschlüssel bezeichnende Schlüsselkennung gespeichert ist, und der Verschlüsseler ausgebildet ist, den mittels des wenigstens einen Kodierschlüssels verschlüsselten Daten nach der Verschlüsselung automatisch die jeweilige Schlüsselkennung des verwendeten Kodierschlüssels unverschlüsselt beizufügen.

Hierdurch ist es einer anderen Netzwerkkomponente, welche die verschlüsselten Daten über das Übertragungsnetzwerk empfängt, auf besonders einfache Weise möglich, den für die Entschlüsselung der verschlüsselten Daten erforderlichen Kodierschlüssel zu identifizieren. In der Folge kann eine Entschlüsselung der Daten besonders schnell und einfach erfolgen.

Dabei kann der Verschlüsseler weiter ausgebildet sein, um vor einer Verschlüsselung automatisch einen Kontrollwert für die von der zugeordneten Kommunikationsschnittstelle empfangenen zu verschlüsselnden Daten oder die bereits verschlüsselten Daten zu berechnen und den berechneten Kontrollwert vor der Verschlüsselung den zu verschlüsselnden Daten oder nach der Verschlüsselung den verschlüsselten Daten beizufügen. Alternativ kann ein derartiger Kontrollwert bereits in den ursprünglichen zu verschlüsselnden Daten enthalten sein.

Anhand des Kontrollwertes kann eine zweite Netzwerkkomponente, welche einer die verschlüsselten Daten über das Übertragungsnetzwerk empfangenden Kommunikationsschnittstelle zugeordnet ist, automatisch auf einfache Weise feststellen, ob die Daten vollständig sind und/oder korrekt entschlüsselt wurden.

Gemäß einer Ausführungsform ist der Entschlüsseler zudem ausgebildet, in den verschlüsselten Daten oder den entschlüsselten Daten automatisch einen Kontrollwert zu identifizieren, eine Prüfsumme für die mittels des wenigstens einen Kodierschlüssels entschlüsselten Daten oder die verschlüsselten Daten zu berechnen und die Prüfsumme mit dem Kontrollwert zu vergleichen. Dabei ist der Datenselektor ausgebildet, eine Übertragung von entschlüsselten Daten an die wenigstens eine zugeordnete Kommunikationsschnittstelle automatisch zu verhindern, wenn die Prüfsumme nicht mit dem Kontrollwert übereinstimmt.

Durch Vergleich der Prüfsumme mit dem Kontrollwert kann der Entschlüsseler auf besonders einfache und zuverlässige Weise feststellen, ob die empfangenen verschlüsselten Daten vollständig sind und korrekt entschlüsselt wurden. Indem der Datenselektor die entschlüsselten Daten nur dann an die zugeordnete Kommunikationsschnittstelle weitergibt, wenn die Prüfsumme mit dem Kontrollwert übereinstimmt, ist sichergestellt, dass unkorrekt entschlüsselte Daten oder unvollständig empfangene Daten nicht von der zugeordneten Kommunikationsschnittstelle empfangen werden. Somit weisen die der zugeordneten Kommunikationsschnittstelle übermittelten Daten immer eine vorgegebene Mindestqualität auf.

Gemäß einer Ausführungsform kann der Datenselektor ferner ausgebildet sein, eine Übertragung von über das Übertragungsnetzwerk empfangenen unverschlüsselten Daten an die wenigstens eine zugeordnete Kommunikationsschnittstelle automatisch zu verhindern.

Somit erlaubt die erfindungsgemäße Netzwerkkomponente nur einen verschlüsselten Datenaustausch mit über das Übertragungsnetzwerk verbundenen Kommunikationsschnittstellen, wobei jeweils ein gemeinsamer vorgegebener Kodierschlüssel verwendet werden muss. Da der Kodierschlüssel einem Unberechtigten nicht bekannt ist, ist ein Angriff auf die zugeordnete Kommunikationsschnittstelle über das Übertragungsnetzwerk nicht möglich.

Bevorzugt kann die Netzwerkkomponente eine in die Netzwerkkomponente dauerhaft integrierte zweite Speichereinrichtung aufweisen, in der wenigstens eine Spezifikation eines in dem Kommunikationsnetzwerk verwendeten Übertragungsprotokolls gespeichert ist. Dann ist der Entschlüsseler vorzugsweise ausgebildet, in den über das Übertragungsnetzwerk empfangenen verschlüsselten Daten unter Verwendung der gespeicherten Spezifikationen einen lediglich auf das jeweilige verwendete Übertragungsprotokoll zurückzuführenden unverschlüsselten Protokolldatenteil und einen die übrigen Daten enthaltenden verschlüsselten Nutzdatenteil zu detektieren und lediglich den verschlüsselten Nutzdatenteil mittels des wenigstens einen Kodierschlüssels zu entschlüsseln.

Das Vorsehen einer zweiten Speichereinrichtung, in der wenigstens eine Spezifikation eines in dem Kommunikationsnetzwerk verwendeten Übertragungsprotokolls gespeichert ist, erlaubt es dem Entschlüsseler, in den über das Übertragungsnetzwerk empfangenen verschlüsselten Daten automatisch ein für den Datenaustausch verwendetes Übertragungsprotokoll zu identifizieren. In der Folge können der Protokolldatenteil und der Nutzdatenteil leicht in den empfangenen Daten detektiert werden. Dabei wird unter Übertragungsprotokoll eine Vorschrift verstanden, welche im Rahmen eines Datenaustauschs über ein Übertragungsnetzwerk die Aufteilung eines Datenstromes oder eines Datenpaketes in Einzelkomponenten wie beispielsweise einen Protokolldatenteil und einen Nutzdatenteil enthält. Weiter enthält das Übertragungsprotokoll Festlegungen möglicher Werte und Bedeutungen von in dem Protokolldatenteil enthaltenen Komponenten. Diese Komponenten können beispielsweise Kommunikationsadressen, die Größe und Aufteilung der Daten sowie mögliche Kontrolldaten sein. Auch Wechselwirkungen zwischen Inhalten des Protokolldatenteils und des Nutzdatenteils können im Übertragungsprotokoll festgelegt sein.

In diesem Fall kann der Entschlüsseler weiter ausgebildet sein, unter Verwendung der gespeicherten Spezifikationen und des detektierten Protokolldatenteils automatisch einen neuen Protokolldatenteil für den entschlüsselten Nutzdatenteil zu erstellen.

Hierdurch kann der Entschlüsseler aus dem neuen Protokolldatenteil und dem entschlüsselten Nutzdatenteil auf besonders einfache Weise dem identifizierten Übertragungsprotokoll entsprechende entschlüsselte Daten bilden. Die Bildung des neuen Protokolldatenteils kann z.B. erforderlich sein, wenn sich die Größe des Nutzdatenteils und / oder die Aufteilung der entschlüsselten Daten in Datenpakete ändert.

Ferner kann der Entschlüsseler ausgebildet sein, in dem detektierten Protokolldatenteil automatisch eine in dem Übertragungsnetzwerk zur Adressierung einer jeweiligen adressierten Kommunikationsschnittstelle verwendete Kommunikationsadresse zu identifizieren und den neuen Protokolldatenteil für den entschlüsselten Nutzdatenteil unter Beibehaltung der detektierten Kommunikationsadresse zu bilden.

Die Beibehaltung der ursprünglich verwendeten Kommunikationsadresse bei der Bildung des neuen Protokolldatenteils hat zur Folge, dass die erfindungsgemäße Netzwerkkomponente aus Sicht des Übertragungsnetzwerkes transparent ist. Dabei wird unter Transparenz verstanden, dass eine in dem Protokolldatenteil der von der erfindungsgemäßen Netzwerkkomponente empfangenen Daten enthaltene Kommunikationsadresse einer adressierten Kommunikationsschnittstelle identisch mit der in einem Protokolldatenteil der von der Netzwerkkomponente ausgegebenen Daten enthaltenen Kommunikationsadresse einer adressierten Kommunikationsschnittstelle ist. Dies schließt jedoch nicht aus, dass die in dem Protokolldatenteil der von der Netzwerkkomponente ausgegebenen Daten enthaltene Kommunikationsadresse der sendenden Kommunikationsschnittstelle durch die erfindungsgemäße Netzwerkkomponente verändert wird. In der Folge ist für die Einbindung der Netzwerkkomponente zwischen Übertragungsnetzwerk und zugeordneter wenigstens einer Kommunikationsschnittstelle keine Anpassung des Übertragungsnetzwerkes erforderlich. Weiter braucht der Netzwerkkomponente für einen Datenaustausch zwischen den Kommunikationsschnittstellen auch keine eigene, über das Übertragungsnetzwerk adressierbare Kommunikationsadresse zugeordnet zu sein.

Gemäß einer weiteren Ausführungsform ist der Entschlüsseler ferner ausgebildet, über einen ersten Kanal des Übertragungsnetzwerks einen unverschlüsselten Protokolldatenteil zu empfangen, welcher Protokolldatenteil eine in dem jeweiligen Übertragungsnetzwerk zur Adressierung einer jeweiligen Kommunikationsschnittstelle verwendete Kommunikationsadresse angibt, über einen zweiten, von dem ersten Kanal des Übertragungsnetzwerks verschiedenen Kanal des Übertragungsnetzwerks einen verschlüsselten Nutzdatenteil zu empfangen, welcher Nutzdatenteil zwischen den Kommunikationsschnittstellen zu übertragende Daten enthält, und nur den verschlüsselten Nutzdatenteil mittels des wenigstens einen Kodierschlüssels zu entschlüsseln.

Somit ist die erfindungsgemäße Netzwerkkomponente auch in Übertragungsnetzwerken einsetzbar, bei denen eine Datenübertragung eines Protokolldatenteils und eines Nutzdatenteils auf unterschiedlichen Kanälen erfolgt. Dies ist beispielsweise bei einem ISDN-Kommunikationsnetzwerk der Fall.

Dabei ist offensichtlich, dass die Kanäle nicht physikalisch getrennt sein müssen, sondern eine softwareimplementierte Trennung ausreicht.

Vorzugsweise kann der Entschlüsseler weiter ausgebildet sein, in dem detektierten oder über den ersten Kanal empfangenen Protokolldatenteil automatisch eine in dem Übertragungsnetzwerk zur Adressierung einer jeweiligen sendenden Kommunikationsschnittstelle verwendete Kommunikationsadresse zu identifizieren und zusammen mit einer Schlüsselkennung, die den für die Entschlüsselung verwendeten Kodierschlüssel bezeichnet, in der ersten und/oder zweiten Speichereinrichtung zu speichern. Diese Speicherung kann beispielsweise in Form einer Datenbank erfolgen.

Folglich kann die erfindungsgemäße Netzwerkkomponente automatisch mitprotokollieren, welche Datentransfers mit welchen Kommunikationsschnittstellen unter Verwendung welcher Kodierschlüssel erfolgreich waren.

Dann kann der Entschlüsseler zudem ausgebildet sein, in dem detektierten oder über den ersten Kanal empfangenen Protokolldatenteil automatisch die zur Adressierung einer jeweiligen sendenden Kommunikationsschnittstelle verwendete Kommunikationsadresse zu identifizieren, in der ersten und/oder zweiten Speichereinrichtung eine dieser Kommunikationsadresse zugeordnete Schlüsselkennung zu suchen und bei der Entschlüsselung des verschlüsselten Nutzdatenteils den der jeweiligen Schlüsselkennung zugeordneten Kodierschlüssel zu verwenden.

Hierdurch wird die Auswahl eines zur Entschlüsselung geeigneten Kodierschlüssels erheblich beschleunigt. Der Grund ist, dass auf Kodierschlüssel zurückgegriffen wird, die bei Datenverbindungen mit einer jeweiligen sendenden Kommunikationsadresse in der Vergangenheit eine erfolgreiche Entschlüsselung der verschlüsselten Daten zur Folge hatten.

Der Verschlüsseler kann weiter ausgebildet sein, in dem detektierten oder über den ersten Kanal empfangenen Protokolldatenteil automatisch eine zur Adressierung einer jeweiligen adressierten Kommunikationsschnittstelle verwendete Kommunikationsadresse zu identifizieren, in der ersten und/oder zweiten Speichereinrichtung eine dieser Kommunikationsadresse zugeordnete Schlüsselkennung zu suchen und bei der Verschlüsselung der Daten den der jeweiligen Schlüsselkennung zugeordneten Kodierschlüssel zu verwenden.

Folglich verwendet der Verschlüsseler automatisch Kodierschlüssel, die in der Vergangenheit einen Datenaustausch mit der einer jeweiligen adressierten Kommunikationsschnittstelle zugeordneten Kommunikationsadresse ermöglicht haben. Somit wird automatisch ermittelt, welche vorgegebenen Kodierschlüssel einen Datenaustausch mit dieser Kommunikationsschnittstelle ermöglichen.

Alternativ oder zusätzlich kann der Verschlüsseler ausgebildet sein, um automatisch vorgegebene Testdaten unter Verwendung eines beliebigen in der ersten Speichereinrichtung gespeicherten vorgegebenen Kodierschlüssels zu verschlüsseln und über das Übertragungsnetzwerk an eine jeweilige adressierte Kommunikationsschnittstelle zu senden, wenn in der ersten und/oder zweiten Speichereinrichtung keine der zur Adressierung der jeweiligen adressierten Kommunikationsschnittstelle verwendeten Kommunikationsadresse zugeordnete Schlüsselkennung gespeichert ist.

Dabei bewirken die Testdaten nach einer erfolgreichen Entschlüsselung mittels des vorgegebenen Kodierschlüssels durch die adressierte Kommunikationsschnittstelle bevorzugt das automatische Senden einer Empfangsbestätigung. Somit kann der Verschlüsseler automatisch feststellen, welcher Kodierschlüssel einer der adressierten Kommunikationsschnittstelle zugeordneten Netzwerkkomponente bekannt ist.

Wenn in der ersten und/oder zweiten Speichereinrichtung keine der zur Adressierung der jeweiligen adressierten Kommunikationsschnittstelle verwendeten Kommunikationsadresse zugeordnete Schlüsselkennung gespeichert ist, kann der Verschlüsseler gemäß einer Ausführungsform ferner ausgebildet sein, automatisch unverschlüsselte Nutzdaten, die alle oder eine Teilmenge der in der ersten und/oder zweiten Speichereinrichtung der Netzwerkkomponente gespeicherten Schlüsselkennungen angeben, über das Übertragungsnetzwerk an eine jeweilige adressierte Kommunikationsschnittstelle zu senden.

Das Senden von unverschlüsselten Nutzdaten, die alle, oder eine Teilmenge der in der Netzwerkkomponente gespeicherten Schlüsselkennungen angeben, ist unkritisch, da die Schlüsselkennungen die Kodierschlüssel lediglich bezeichnen und nicht enthalten. In der Folge führt ein Abfangen oder Abhören der unverschlüsselt gesendeten Schlüsselkennungen nicht dazu, dass ein Unberechtigter in die Lage versetzt wird, Daten mittels der Kodierschlüssel zu verschlüsseln oder zu entschlüsseln.

Dann kann der Entschlüsseler weiter ausgebildet sein, um bei Erhalt von unverschlüsselten Nutzdaten über das Übertragungsnetzwerk, die mehrere Schlüsselkennungen angeben, automatisch die angegebenen Schlüsselkennungen mit allen in der ersten und/oder zweiten Speichereinrichtung der Netzwerkkomponente gespeicherten Schlüsselkennungen zu vergleichen, in dem den empfangenen Nutzdaten zugehörigen detektierten oder über den ersten Kanal empfangenen Protokolldatenteil die zur Adressierung einer jeweiligen sendenden Kommunikationsschnittstelle verwendete Kommunikationsadresse zu identifizieren, und über das Übertragungsnetzwerk an die jeweilige sendende Kommunikationsschnittstelle unverschlüsselte Nutzdaten zu senden, die alle gemeinsamen Schlüsselkennungen enthalten.

Der Entschlüsseler kann dann ferner ausgebildet sein, bei Erhalt von unverschlüsselten Nutzdaten über das Übertragungsnetzwerk, die gemeinsame Schlüsselkennungen angeben, automatisch in dem den empfangenen Nutzdaten zugehörigen detektierten oder über den ersten Kanal empfangenen Protokolldatenteil die zur Adressierung einer jeweiligen sendenden Kommunikationsschnittstelle verwendete Kommunikationsadresse zu identifizieren, und zusammen mit den gemeinsamen Schlüsselkennungen in der ersten und/oder zweiten Speichereinrichtung zu speichern.

In der Folge können sich unterschiedlichen Kommunikationsschnittstellen zugeordnete erfindungsgemäße Netzwerkkomponenten automatisch ohne Benutzereingriff auf die Verwendung von wechselseitig bekannten Kodierschlüsseln einigen, ohne dass eine Übertragung der Kodierschlüssel über das Übertragungsnetzwerk erforderlich ist. Durch die Speicherung der der jeweiligen sendenden Kommunikationsschnittstelle zugeordneten Kommunikationsadresse zusammen mit der jeweiligen gemeinsamen Schlüsselkennung wird automatisch sichergestellt, dass die erfindungsgemäße Netzwerkkomponente für einen gegenseitigen Datenaustausch mit dieser Kommunikationsadresse zukünftig einen Kodierschlüssel verwendet, welcher der gemeinsamen Schlüsselkennung zugeordnet ist.

Der Verschlüsseler ist gemäß einer Ausführungsform ferner ausgebildet, in den von der wenigstens einen zugeordneten Kommunikationsschnittstelle empfangenen Daten unter Verwendung der gespeicherten Spezifikationen automatisch einen lediglich auf das jeweilige verwendete Übertragungsprotokoll zurückzuführenden Protokolldatenteil und einen die übrigen Daten enthaltenden Nutzdatenteil zu detektieren und lediglich den Nutzdatenteil mittels des wenigstens einen Kodierschlüssels zu verschlüsseln.

Indem lediglich der Nutzdatenteil verschlüsselt wird, ist sichergestellt, dass der Protokolldatenteil für das Übertragungsnetzwerk und mit dem Übertragungsnetzwerk verbundene Kommunikationsschnittstellen lesbar bleibt.

Dann kann der Verschlüsseler weiter ausgebildet sein, unter Verwendung der gespeicherten Spezifikationen und des detektierten Protokolldatenteils automatisch einen neuen Protokolldatenteil für den verschlüsselten Nutzdatenteil zu erstellen.

Da der detektierte Protokolldatenteil in der Regel die dem jeweiligen Übertragungsprotokoll entsprechenden wesentlichen Informationen wie beispielsweise die Kommunikationsadressen der sendenden und empfangenden Kommunikationsschnittstellen enthält, kann der neue Protokolldatenteil auf besonders einfache Weise gebildet werden. Dabei ist in der Regel nur eine Anpassung an die neue Größe der verschlüsselten Daten und die Aufteilung der verschlüsselten Daten in Datenpakete erforderlich. Folglich entsprechen auch nach der Verschlüsselung die aus dem neuen Protokolldatenteil und dem verschlüsselten Nutzdatenteil gebildeten verschlüsselten Daten dem jeweiligen Übertragungsprotokoll des jeweiligen Übertragungsnetzwerks.

Weiter kann der Verschlüsseler ausgebildet sein, in dem detektierten Protokolldatenteil automatisch eine in dem Übertragungsnetzwerk zur Adressierung einer jeweiligen adressierten Kommunikationsschnittstelle verwendete Kommunikationsadresse zu identifizieren und den neuen Protokolldatenteil für den verschlüsselten Nutzdatenteil unter Beibehaltung der detektierten Kommunikationsadresse zu bilden.

Folglich ist die erfindungsgemäße Netzwerkkomponente auch für von der zugeordneten Kommunikationsschnittstelle an das Übertragungsnetzwerk übersendete Daten transparent.

Die erste Speichereinrichtung und/oder die zweite Speichereinrichtung kann ein in die Netzwerkkomponente dauerhaft integrierter nichtflüchtiger Speicher sein.

Indem die erste und zweite Speichereinrichtung in der Netzwerkkomponente dauerhaft integriert ist, können diese nicht unauffällig von der Netzwerkkomponente gelöst werden, um gespeicherte Daten auszulesen. Weiter ist die erfindungsgemäße Netzwerkkomponente so ein autonomes System.

Weiter kann die Netzwerkkomponente eine Managementeinrichtung aufweisen, die ausgebildet ist, um Einstellungen an der Netzwerkkomponente vorzunehmen.

Die von der Managementeinrichtung bewirkten Einstellungen können beispielsweise Zustände des Entschlüsseler, des Verschlüsselers oder des Datenselektor betreffen. Weiter können in der ersten und/oder zweiten Speichereinrichtung enthaltene Daten durch die Managementeinrichtung manipuliert und insbesondere vorgegebene Kodierschlüssel verwaltet werden. Insbesondere kann die Managementeinrichtung auch zur Überwachung und Wartung der Netzwerkkomponente dienen.

Der Managementeinrichtung kann eine über das Übertragungsnetzwerk adressierbare Kommunikationsadresse zugeordnet sein. Weiter kann die Managementeinrichtung zum Austausch von Managementdaten mit dem Übertragungsnetzwerk verbundenen sein.

Somit ist eine Konfiguration und Wartung der erfindungsgemäßen Netzwerkkomponente über die mit dem Übertragungsnetzwerk verbundene Managementeinrichtung möglich. Dabei findet eine Datenübertragung von und zu der Managementeinrichtung bevorzugt ebenfalls unter Verwendung von verschlüsselten Daten statt, die mittels eines speziellen vorgegebenen Kodierschlüssels durch die Managementeinrichtung automatisch verschlüsselt bzw. entschlüsselt werden.

Die Netzwerkkomponente kann ein erstes Identifizierungssystem zur Feststellung der Identität eines Benutzers aufweisen, wobei das Identifizierungssystem nur nach erfolgreicher Identifizierung eines Benutzers ein Auslesen des Speichers und / oder eine Aktivität des Managementsystems zulässt.

In der Folge hängen alle wesentlichen Funktionen der erfindungsgemäßen Netzwerkkomponente von einer erfolgreichen Identifizierung eines Benutzers ab. Insbesondere erlaubt die erfindungsgemäße Netzwerkkomponente nur einem erfolgreich identifizierten Benutzer einen Datenaustausch zwischen der zugeordneten Kommunikationsschnittstelle und dem Übertragungsnetzwerk.

Gemäß einer Ausführungsform ist die erste Speichereinrichtung ein wechselbares nichtflüchtiges Speichermedium und weist die Netzwerkkomponente eine Speicherschnittstelle für das wechselbare Speichermedium auf. Weiter ist die zweite Speichereinrichtung in dieser Ausführungsform ein in die Netzwerkkomponente dauerhaft integrierter nichtflüchtiger Speicher.

Dies ermöglicht eine besonders einfache und flexible Verteilung der vorgegebenen Kodierschlüssel. Beispielsweise können verschiedene Speichermedien mit verschiedenen vorgegebene Kodierschlüsseln bereitgestellt werden. In Abhängigkeit davon, welches Speichermedium mit welchen Kodierschlüsseln über die Speicherschnittstelle mit der Netzwerkkomponente verbunden ist, ist die Netzwerkkomponente in der Lage, einen Datenaustausch mit einem unterschiedlichen Kreis von über das Übertragungsnetzwerk verbundenen Kommunikationsschnittstellen und diesen zugeordneten Netzwerkkomponenten auszuführen. Somit können beispielsweise einer Arbeitsgruppe in einer Firma stets die dieser Arbeitsgruppe zugewiesenen Datenverbindungen zur Verfügung gestellt werden, unabhängig davon, welche Kommunikationsschnittstellen von Mitgliedern der Arbeitsgruppe für den Datenaustausch gerade verwendet werden. Diese erfolgt dadurch, dass die Mitglieder der Arbeitsgruppe einfach die ihnen zugeordneten vorgegebenen Kodierschlüssel über das wechselbare Speichermedium und die Speicherschnittstelle in eine jeweilige Netzwerkkomponente laden.

Dabei kann das wechselbare Speichermedium eine Diskette, eine Compact Disc CD, eine Digital Versatile Disc DVD, eine Chipkarte oder ein USB-Token sein.

Derartige wechselbare Speichermedien sind kostengünstig, weit verbreitet und weisen eine ausreichende Zuverlässigkeit und Robustheit auf.

Das wechselbare Speichermedium kann bevorzugt ein zweites Identifizierungssystem zur Feststellung der Identität eines Benutzers aufweisen, wobei das Identifizierungssystem ein Auslesen des wechselbaren Speichermediums nur nach erfolgreicher Identifizierung eines Benutzers zulässt.

Bei wechselbaren nichtflüchtigen Speichermedien besteht allgemein die Gefahr, dass auf den Speichermedien gespeicherte Daten von Unbefugten ausgelesen werden, wenn die Speichermedien gestohlen werden oder verloren gehen. Dies ist kritisch, wenn auf den Speichermedien sensible Daten wie im vorliegenden Fall vorgegebene Kodierschlüssel gespeichert sind. Ein unberechtigtes Auslesen der Speichermedien wird durch das zweite Identifizierungssystem verhindert bzw. erheblich erschwert.

Weiter kann dem wechselbaren Speichermedium eine individuelle Speichermedium-Kennung zugewiesen und der Verschlüsseler ausgebildet sein, automatisch die Speichermedium-Kennung eines über die Speicherschnittstelle für das wechselbare Speichermedium mit der Netzwerkkomponente verbundenen wechselbaren Speichermediums auszulesen und die ausgelesene Speichermedium-Kennung den zu verschlüsselnden Daten oder den verschlüsselten Daten hinzuzufügen. Bevorzugt können der Verschlüsseler und der Entschlüsseler auch ausgebildet sein, eine empfangenen Daten hinzugefügte Speichermedium-Kennung auszulesen und anstelle einer in den empfangenen Daten identifizierten Kommunikationsadresse zu verwenden.

Wie bereits ausgeführt, erlaubt es die Verwendung von wechselbaren Speichermedien einem Benutzer, durch Einlesen der auf dem wechselbaren Speichermedium gespeicherten vorgegebenen Kodierschlüssel in eine Netzwerkkomponente einen Datenaustausch mittels einer beliebigen dieser Netzwerkkomponente zugeordneten Kommunikationsschnittstelle auszuführen. Da sich dabei die Kommunikationsadresse der Kommunikationsschnittstelle in Abhängigkeit von der verwendeten Netzwerkkomponente ändert, erlaubt es das Beifügen der Speichermediumkennung zu den übermittelten Daten, den Benutzer auf besonders einfache Weise zu identifizieren.

Das Identifizierungssystem kann eine Tastatur zur Eingabe eines persönlichen Identifizierungscodes und/oder einen Sensor zur Erfassung biometrischer Daten aufweisen.

Weiter kann der Netzwerkkomponente eine individuelle Netzwerkkomponente-Kennung zugewiesen sein. Dann kann der Verschlüsseler ausgebildet sein, automatisch die Netzwerkkomponente-Kennung auszulesen und den zu verschlüsselnden Daten die Netzwerkkomponente-Kennung der Netzwerkkomponente hinzuzufügen.

Dies erlaubt auf einfache Weise eine Auswertung, welche Netzwerkkomponente für einen Datenaustausch verwendet wurde.

Gemäß einer Ausführungsform können den in der ersten Speichereinrichtung gespeicherten Kodierschlüsseln jeweils Metadaten zugeordnet sein und die Metadaten Informationen über die Art und Weise der Verwendung des jeweiligen Kodierschlüssels enthalten. Zusätzlich oder alternativ können in der zweiten Speichereinrichtung Metadaten gespeichert sein, die jeweils einer Schlüsselkennung eines Kodierschlüssels zugeordnet sind.

Der Entschlüsseler, der Verschlüsseler, der Datenselektor und vorzugsweise die Managementeinrichtung können in einen Mikroprozessor integriert sein.

Dies erlaubt eine besonders kostengünstige Realisierung der erfindungsgemäßen Netzwerkkomponente.

Dabei kann der Mikroprozessor bevorzugt ein Betriebssystem aufweisen, das von einem Betriebssystem der wenigstens einen zugeordneten Kommunikationsschnittstelle verschieden ist.

Hierdurch ist die erfindungsgemäße Netzwerkkomponente besonders gut gegen Manipulationen durch Unberechtigte über das Übertragungsnetzwerk geschützt, da dem Unberechtigten der Aufbau des Betriebssystems nicht bekannt ist. Weiter ist so die Funktionsweise der erfindungsgemäßen Netzwerkkomponente auch dann sichergestellt, wenn ein Betriebssystem, welches von der zugeordneten Kommunikationsschnittstelle verwendet wird, einen Fehler oder eine Schwachstelle aufweist.

Gemäß eines weiteren Aspekts betrifft die vorliegende Erfindung ein Kommunikationsnetzwerk, welches ein einen Datenaustausch ermöglichendes Übertragungsnetzwerk sowie eine Mehrzahl von mit dem Übertragungsnetzwerk verbundenen Kommunikationsschnittstellen aufweist. Dabei sind die Kommunikationsschnittstellen zum Datenaustausch über das Übertragungsnetzwerk ausgebildet. Das Kommunikationsnetzwerk weist weiter wenigstens zwei Netzwerkkomponenten mit den Merkmalen eines der Ansprüche 1 bis 17 auf. Die Netzwerkkomponenten sind jeweils mindestens einer Kommunikationsschnittstelle zugeordnet, sowie zwischen der jeweiligen zugeordneten Kommunikationsschnittstelle und dem Übertragungsnetzwerk angeordnet.

Ist in den jeweiligen ersten und/oder zweiten Speichereinrichtungen der wenigstens zwei über das Übertragungsnetzwerk verbundenen Netzwerkkomponenten wenigstens ein gemeinsamer Kodierschlüssel gespeichert, so können die den beiden Netzwerkkomponenten zugeordneten Kommunikationsschnittstellen Daten über das Übertragungsnetzwerk austauschen. Da dieser Datenaustausch verschlüsselt erfolgt, ist ein Abhören bzw. eine Manipulation durch einen Unberechtigten nicht möglich oder zumindest erheblich erschwert. Über diese Verschlüsselung bzw. Entschlüsselung der zu übertragenden Daten nehmen die Netzwerkkomponenten das erfindungsgemäße Kommunikationsnetzwerk ohne Benutzereingriff implizit eine Freischaltung bzw. Sperrung von Datenübertragungswegen zwischen zugeordneten Kommunikationsschnittstellen vor. Diese impliziten Datenübertragungswege überlagern das Übertragungsnetzwerk. Indem die Netzwerkkomponenten eine Weiterleitung von unverschlüsselt empfangenen Daten an die jeweils zugeordnete Kommunikationsschnittstelle verhindern, wird auch ein Zugriff eines Unberechtigten auf diese Kommunikationsschnittstellen wirkungsvoll verhindert.

Dabei kann wenigstens eine der wenigstens zwei Netzwerkkomponenten zwischen einer Mehrzahl von dieser Netzwerkkomponente zugeordneten Kommunikationsschnittstellen und dem Übertragungsnetzwerk angeordnet sein.

Somit kann die erfindungsgemäße Netzwerkkomponente auch mehr als nur eine Kommunikationsschnittstelle mit dem Übertragungsnetzwerk verbinden. Beispielsweise kann so ein Subnetzwerk in das Übertragungsnetzwerk eingebunden werden.

Weiter kann den Kommunikationsschnittstellen des Kommunikationsnetzwerks zur Adressierung im Rahmen des gegenseitigen Datenaustauschs jeweils eine eindeutige Kommunikationsadresse zugewiesen sein, wobei die Netzwerkkomponenten so ausgebildet sind, dass die jeweilige Kommunikationsadresse der zugeordneten Kommunikationsschnittstelle für das Übertragungsnetzwerk sichtbar ist.

Folglich sind die Netzwerkkomponenten des erfindungsgemäßen Kommunikationsnetzwerks für das Übertragungsnetzwerk bevorzugt transparent.

Gemäß einer Ausführungsform sind die Kommunikationsschnittstellen ausgebildet, zu übertragende Daten vor einer Ausgabe an die jeweilige zugehörige Netzwerkkomponente gemäß eines von dem Übertragungsnetzwerk verwendeten Übertragungsprotokolls zu codieren. Dabei sind die Netzwerkkomponenten ausgebildet, die von der jeweiligen zugehörigen Kommunikationsschnittstelle empfangenen Daten so zu verarbeiten (verschlüsseln oder entschlüsseln), dass auch die verarbeiteten Daten entsprechend des von dem Übertragungsnetzwerk verwendeten Protokolls codiert sind.

Jeder Kommunikationsschnittstelle kann eine Kommunikationsadressen zugeordnet sein, wobei das Übertragungsnetzwerk Switches und / oder Router aufweisen kann, welche anhand der Kommunikationsadresse gezielt Datenkanäle zwischen den Kommunikationsschnittstellen bereitstellen.

Dabei kann das Übertragungsnetzwerk zwischen den Kommunikationsschnittstellen bevorzugt eine IEEE802.3 Ethernet Verbindung oder eine IEEE802.11 Wireless-LAN-Verbindung oder eine ISDN-Verbindung oder eine GSM-Verbindung oder eine UMTS-Verbindung oder eine TCP/IP-Verbindung bereitstellen.

Somit kann das erfindungsgemäße Kommunikationsnetzwerk auf den üblichen vorbekannten Übertragungsnetzwerken aufbauen.

Gemäß einer Ausführungsform kann die Netzwerkkomponente eine von der jeweiligen zugeordneten Kommunikationsschnittstelle separate Vorrichtung sein.

Dies erlaubt ein einfaches Aufbauen des erfindungsgemäßen Kommunikationsnetzwerkes basierend auf einem bestehenden Netzwerk durch Anordnen der erfindungsgemäßen Netzwerkkomponente zwischen einer jeweiligen wenigstens einen zugeordneten Kommunikationsschnittstelle und dem Übertragungsnetzwerk.

Gemäß eines weiteren Aspekts der vorliegenden Erfindung weist ein Verfahren zur Bereitstellung einer Datenverbindung zwischen wenigstens zwei über ein Übertragungsnetzwerk miteinander verbindbaren Kommunikationsschnittstellen, wobei zwischen wenigstens zwei der Kommunikationsschnittstellen und dem Übertragungsnetzwerk jeweils eine Netzwerkkomponente vorgesehen ist, die folgenden Schritte auf: Empfangen von einer Kommunikationsschnittstelle über das Übertragungsnetzwerk zugesandten verschlüsselten Daten durch die jeweilige Netzwerkkomponente vor Ausgabe der Daten an die jeweilige Kommunikationsschnittstelle. Entschlüsseln der empfangenen verschlüsselten Daten unter Verwendung wenigstens eines vorgegebenen Kodierschlüssels. Und Weiterleiten der entschlüsselten Daten durch die Netzwerkkomponente an die jeweilige Kommunikationsschnittstelle zur Bereitstellung einer Datenverbindung, wenn die verschlüsselten Daten mittels des wenigstens einen Kodierschlüssels entschlüsselbar sind.

Indem erfindungsgemäß durch die Netzwerkkomponente nur Daten an die zugeordnete jeweilige Kommunikationsschnittstelle weitergeleitet werden, welche unter Verwendung wenigstens eines vorgegebenen Kodierschlüssels entschlüsselt werden können, stellt das erfindungsgemäße Verfahren in Abhängigkeit von den vorgegebenen Kodierschlüsseln über das Übertragungsnetzwerk implizit nur Datenverbindungen zu Kommunikationsschnittstellen her, welche zu sendende Daten mittels wenigstens einem gleichen vorgegebenen Kodierschlüssel verschlüsseln.

Dabei kann das Verfahren ferner die folgenden Schritte aufweisen: Identifizieren von einer in den über das Übertragungsnetzwerk empfangenen verschlüsselten Daten enthaltenen Schlüsselinformation, welche einen für die Verschlüsselung verwendeten Kodierschlüssel kennzeichnet. Und Verwenden desjenigen der vorgegebenen Kodierschlüssel, welcher der identifizierten Schlüsselinformation entspricht, um die Daten zu entschlüsseln.

Weiter kann das Verfahren die folgenden Schritte aufweisen: Verschlüsseln der durch eine Kommunikationsschnittstelle über das Übertragungsnetzwerk zu übertragenden Daten vor einer Ausgabe der Daten an das Übertragungsnetzwerk durch die Netzwerkkomponente unter Verwendung des wenigstens einen vorgegebenen Kodierschlüssels. Und Ausgabe der verschlüsselten Daten an das Übertragungsnetzwerk.

Ferner kann das Verfahren den Schritt eines Hinzufügen einer den bei der Verschlüsselung verwendeten Kodierschlüssel bezeichnenden Schlüsselkennung zu den verschlüsselten Daten vor der Ausgabe der verschlüsselten Daten an das Übertragungsnetzwerk aufweisen.

Gemäß einer Ausführungsform weist das Verfahren weiter die Schritte des Berechnen eines Kontrollwerts für die zu verschlüsselnden Daten und des Hinzufügen des Kontrollwerts zu den zu verschlüsselnden Daten vor der Verschlüsselung oder zu den verschlüsselten Daten nach der Verschlüsselung auf.

Weiter kann das Verfahren die folgenden Schritte aufweisen: Identifizieren eines Kontrollwerts in den verschlüsselten Daten oder den entschlüsselten Daten. Berechnen einer Prüfsumme für die mittels des wenigstens einen Kodierschlüssels entschlüsselten Daten. Vergleichen der Prüfsumme mit dem Kontrollwert. Und Verhindern einer Übertragung der entschlüsselten Daten an die wenigstens eine zugeordnete Kommunikationsschnittstelle, wenn die Prüfsumme nicht mit dem Kontrollwert übereinstimmt.

Die folgenden Schritte können bei dem erfindungsgemäßen Verfahren weiter vorgesehen sein: Empfangen von einer Kommunikationsschnittstelle über das Übertragungsnetzwerk zugesandten unverschlüsselten Daten durch die jeweilige Netzwerkkomponente. Erkennen, dass die empfangenen Daten nicht mittels eines vorgegebenen Kodierschlüssels verschlüsselt sind. Und Verhindern einer Übertragung der empfangenen unverschlüsselten Daten an die wenigstens eine zugeordnete Kommunikationsschnittstelle durch die Netzwerkkomponente.

Das Verfahren kann ferner folgende Schritte aufweisen: Identifizieren eines in dem Übertragungsnetzwerk verwendeten Übertragungsprotokolls anhand der über das Übertragungsnetzwerk empfangenen verschlüsselten Daten unter Verwendung von Spezifikationen bekannter Übertragungsprotokolle. Detektieren eines lediglich auf das jeweilige verwendete Übertragungsprotokoll zurückzuführenden unverschlüsselten Protokolldatenteils und eines die übrigen Daten enthaltenden verschlüsselten Nutzdatenteils in den empfangenen verschlüsselten Daten. Und Entschlüsseln von lediglich dem verschlüsselten Nutzdatenteil mittels des wenigstens einen Kodierschlüssels.

Dann können weiter die Schritte des Erstellen eines neuen Protokolldatenteils für den entschlüsselten Nutzdatenteil unter Verwendung der Spezifikation des identifizierten Übertragungsprotokolls und des detektierten Protokolldatenteils und des Bilden von dem identifizierten Übertragungsprotokoll entsprechenden entschlüsselten Daten aus dem neuen Protokolldatenteil und dem entschlüsselten Nutzdatenteil vorgesehen sein.

Weiter können die Schritte des Identifizieren einer in dem Übertragungsnetzwerk zur Adressierung einer jeweiligen adressierten Kommunikationsschnittstelle verwendeten Kommunikationsadresse in dem detektierten Protokolldatenteil und des Bilden des neuen Protokolldatenteils für den entschlüsselten Nutzdatenteil unter Beibehaltung der detektierten Kommunikationsadresse vorgesehen sein.

Gemäß einer Ausführungsform weist das Verfahren weiter die folgenden Schritte auf: Empfangen eines unverschlüsselten Protokolldatenteils über einen ersten Kanal des Übertragungsnetzwerks, welcher Protokolldatenteil eine in dem jeweiligen Übertragungsnetzwerk zur Adressierung einer jeweiligen Kommunikationsschnittstelle verwendete Kommunikationsadresse angibt. Und Empfangen eines verschlüsselten Nutzdatenteils über einen zweiten, von dem ersten Kanal des Übertragungsnetzwerks verschiedenen Kanal des Übertragungsnetzwerks, welcher Nutzdatenteil zwischen den Kommunikationsschnittstellen zu übertragende Daten enthält. Dann wird bevorzugt nur der über den zweiten Kanal empfangene Nutzdatenteil unter Verwendung des wenigstens einen vorgegebenen Kodierschlüssels entschlüsselt.

Die Schritte des Identifizieren einer in dem Übertragungsnetzwerk zur Adressierung einer jeweiligen sendenden Kommunikationsschnittstelle verwendeten Kommunikationsadresse in dem detektierten oder über den ersten Kanal empfangenen Protokolldatenteil und des Zuordnen der identifizierten Kommunikationsadresse zu einer Schlüsselkennung, die den für die Entschlüsselung verwendeten Kodierschlüssel bezeichnet, nach dem Entschlüsseln des empfangenen Nutzdatenteils, können weiter vorgesehen sein.

Weiter kann das Verfahren die folgenden Schritte aufweisen: Identifizieren einer zur Adressierung einer jeweiligen sendenden Kommunikationsschnittstelle verwendeten Kommunikationsadresse in dem detektierten oder über den ersten Kanal empfangenen Protokolldatenteil der zu entschlüsselnden Daten. Suchen einer dieser Kommunikationsadresse zugeordneten Schlüsselkennung. Und Verwenden des der jeweiligen Schlüsselkennung zugeordneten Kodierschlüssels bei der Entschlüsselung der Daten.

Gemäß einer Ausführungsform können ferner die folgenden Schritte vorgesehen sein: Identifizieren eines in dem Übertragungsnetzwerk verwendeten Übertragungsprotokolls anhand der von der wenigstens einen zugeordneten Kommunikationsschnittstelle empfangenen unverschlüsselten Daten unter Verwendung von Spezifikationen bekannter Übertragungsprotokolle. Detektieren eines lediglich auf das jeweilige verwendete Übertragungsprotokoll zurückzuführenden Protokolldatenteils und eines die übrigen Daten enthaltenden Nutzdatenteils in den empfangenen Daten. Und Verschlüsseln von lediglich dem Nutzdatenteil mittels des wenigstens einen Kodierschlüssels.

Dann können weiter die Schritte des Erstellen eines neuen Protokolldatenteils für den verschlüsselten Nutzdatenteil unter Verwendung der Spezifikation des identifizierten Übertragungsprotokolls und des detektierten Protokolldatenteils und des Bilden von dem identifizierten Übertragungsprotokoll entsprechenden verschlüsselten Daten aus dem neuen Protokolldatenteil und dem verschlüsselten Nutzdatenteil vorgesehen sein.

Das Verfahren kann ferner ein Identifizieren einer in dem Übertragungsnetzwerk zur Adressierung einer jeweiligen adressierten Kommunikationsschnittstelle verwendeten Kommunikationsadresse in dem detektierten Protokolldatenteil und ein Bilden des neuen Protokolldatenteils für den verschlüsselten Nutzdatenteil unter Beibehaltung der detektierten Kommunikationsadresse umfassen.

Weiter können ein Identifizieren einer zur Adressierung einer jeweiligen adressierten Kommunikationsschnittstelle verwendeten Kommunikationsadresse in dem detektierten oder über den ersten Kanal empfangenen Protokolldatenteil, ein Suchen einer dieser Kommunikationsadresse zugeordneten Schlüsselkennung und eine Verwendung des der jeweiligen Schlüsselkennung zugeordneten Kodierschlüssels bei der Verschlüsselung vorgesehen sein.

Wenn der zur Adressierung der jeweiligen adressierten Kommunikationsschnittstelle verwendeten Kommunikationsadresse keine Schlüsselkennung zugeordnet ist, kann das Verfahren ferner folgende Schritte aufweisen: Verschlüsseln von vorgegebenen Testdaten unter Verwendung eines beliebigen vorgegebenen Kodierschlüssels und Senden der verschlüsselten Testdaten an eine jeweilige adressierte Kommunikationsschnittstelle.

Alternativ kann das Verfahren, wenn der zur Adressierung der jeweiligen adressierten Kommunikationsschnittstelle verwendeten Kommunikationsadresse keine Schlüsselkennung zugeordnet ist, weiter ein Erstellen von unverschlüsselten Nutzdaten, die Schlüsselkennungen angeben, welche alle vorgegebenen Kodierschlüssel bezeichnen, und ein Senden der unverschlüsselten Nutzdaten an eine jeweilige adressierte Kommunikationsschnittstelle vorsehen.

Gemäß einer Ausführungsform weist das Verfahren weiter die folgenden Schritte auf: Feststellen, dass über das Übertragungsnetzwerk unverschlüsselte Nutzdaten empfangen wurden, die mehrere Schlüsselkennungen angeben. Vergleichen der mehreren Schlüsselkennungen, die in den empfangenen unverschlüsselten Nutzdaten angegeben sind, mit den die vorgegebenen Kodierschlüssel bezeichnenden Schlüsselkennungen. Identifizieren einer zur Adressierung einer jeweiligen sendenden Kommunikationsschnittstelle verwendeten Kommunikationsadresse in dem detektierten oder über den ersten Kanal empfangenen Protokolldatenteil zu den empfangenen unverschlüsselten Nutzdaten. Erstellen von unverschlüsselten Nutzdaten, die alle gemeinsamen Schlüsselkennungen angeben. Und Senden der unverschlüsselten Nutzdaten an eine jeweilige sendende Kommunikationsschnittstelle.

Dann können ferner die folgenden Schritte vorgesehen sein: Feststellen, dass über das Übertragungsnetzwerk unverschlüsselte Nutzdaten empfangen wurden, die gemeinsame Schlüsselkennungen angeben. Identifizieren einer zur Adressierung einer jeweiligen sendenden Kommunikationsschnittstelle verwendeten Kommunikationsadresse in dem detektierten oder über den ersten Kanal empfangenen Protokolldatenteil zu den empfangenen unverschlüsselten Nutzdaten. Und Zuordnen der identifizierten Kommunikationsadresse zu den gemeinsamen Schlüsselkennungen.

Gemäß einer Ausführungsform weist das Verfahren weiter folgende Schritte auf: Feststellung der Identität eines Benutzers. Vergleich der festgestellten Identität mit den Identitäten erlaubter Benutzer. Und Durchführen einer Entschlüsselung oder Verschlüsselung mittels des wenigstens einen vorgegebenen Kodierschlüssels nur, wenn die festgestellte Identität einem erlaubten Benutzer zugeordnet ist.

Die beschriebenen Verfahrensschritte können bevorzugt mittels einer Netzwerkkomponente nach einem der Ansprüche 1 bis 17 ausgeführt werden.

Im Folgenden werden bevorzugte Ausführungsformen der vorliegenden Erfindung unter Bezugnahme auf die beigefügten Zeichnungen beschrieben. Soweit möglich wurden in den Zeichnungen gleiche oder ähnliche Bezugszeichen verwendet um auf gleiche oder ähnliche Elemente zu verweisen. Dabei zeigt
- Figur 1: schematisch den Aufbau eines Kommunikationsnetzwerks gemäß einer bevorzugten Ausführungsform der vorliegenden Erfindung;
- Figur 2: schematisch den Aufbau einer Netzwerkkomponente gemäß der bevorzugten Ausführungsform der vorliegenden Erfindung;
- Figur 3A: schematisch den Aufbau von Daten, welche über ein erstes Übertragungsnetzwerk übertragen werden können;
- Figur 3B: schematisch den Aufbau von Daten, welche über ein zweites Übertragungsnetzwerk übertragen werden können; und
- Figuren 4A, 4B: ein Flussdiagramm einer bevorzugten Ausführungsform des erfindungsgemäßen Verfahrens zur Bereitstellung einer Datenverbindung.

Im Folgenden wird unter Bezugnahme auf die beigefügten Zeichnungen eine bevorzugte Ausführungsform der erfindungsgemäßen Netzwerkkomponente, des erfindungsgemäßen Kommunikationsnetzwerks und des erfindungsgemäßen Verfahrens zur Bereitstellung einer Datenverbindung zwischen wenigstens zwei über ein Übertragungsnetzwerk miteinander verbindbaren Kommunikationsschnittstellen beschrieben.

Das Kommunikationsnetzwerk 1 weist ein Übertragungsnetzwerk 20 auf, mit welchem eine erste bis neunte Kommunikationsschnittstelle 31-39 verbunden ist. Zwischen der ersten bis fünften Kommunikationsschnittstelle 31 bis 35 und dem Übertragungsnetzwerk 20 ist jeweils eine erste bis fünfte Netzwerkkomponente 11-15 angeordnet. Zwischen der sechsten und siebten Kommunikationsschnittstelle 36 und 37 und dem Übertragungsnetzwerk 20 ist eine gemeinsame sechste Netzwerkkomponente 16 angeordnet.

Die erste bis sechste Netzwerkkomponente 11-16 weist jeweils eine erste Schnittstelle 61 sowie eine zweite Schnittstelle 62 auf. Die erste bis siebte Kommunikationsschnittstelle 31-37 ist jeweils mit der ersten Schnittstelle 61 der zugeordneten ersten bis sechsten Netzwerkkomponente 11-16 verbunden. Über die zweite Schnittstelle 62 sind die jeweilige Netzwerkkomponente 11-16 mit dem Übertragungsnetzwerk 20 verbunden. Jeder Kommunikationsschnittstelle 31-39 ist in Abhängigkeit von einem in dem Übertragungsnetzwerk 20 verwendeten Übertragungsprotokoll eine Kommunikationsadresse zugeordnet.

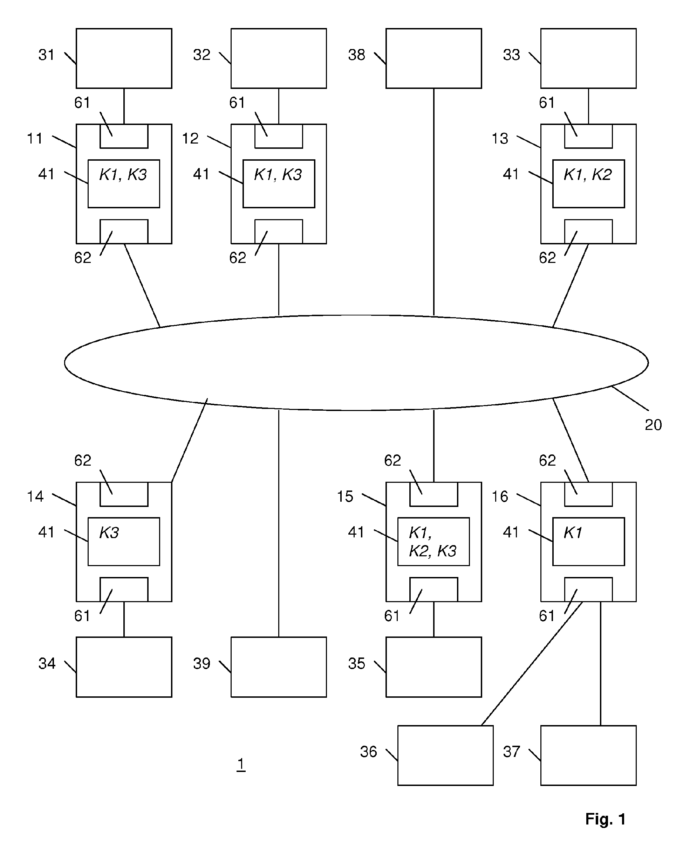

In dem in Figur 1 gezeigten Ausführungsbeispiel stellt das Übertragungsnetzwerk 20 eine TCP/IP-Verbindung zwischen den angeschlossenen ersten bis neunten Kommunikationsschnittstellen 31-39 bereit, um einen Datenaustausch zwischen prinzipiell allen Kommunikationsschnittstellen 31-39 zu ermöglichen. Das Übertragungsnetzwerk 20 weist in Figur 1 nicht gezeigte Switche und/oder Router auf, welche anhand der Kommunikationsadressen gezielt Datenkanäle zwischen den Kommunikationsschnittstellen 31-39 bereitstellen. Dabei sind die Netzwerkkomponenten 11-16 jeweils so ausgebildet, dass die jeweilige Kommunikationsadresse der wenigstens einen zugeordneten Kommunikationsschnittstelle 31-37 für das Übertragungsnetzwerk 20 sichtbar ist und somit von dem Übertragungsnetzwerk 20 weiterhin zur Adressierung der jeweiligen zugeordneten Kommunikationsschnittstelle 31-39 verwendet werden kann.

Alternativ kann das Übertragungsnetzwerk 20 jedoch auch ein anderes, eine digitale Datenübertragung ermöglichendes Datennetzwerk oder Kommunikationsnetzwerk wie beispielsweise ein IEEE 802.3-Netz, oder ein IEEE 802.11 WLAN-Netz, ein ISDN-Netz, ein GSM-Netz oder ein UMTS-Netz sein.

Entsprechend sind die erste bis neunte Kommunikationsschnittstelle 31-39 zum Datenaustausch über ein TCP/IP-Netzwerk ausgebildet und codieren zu übertragende Daten vor einer Ausgabe gemäß eines von dem Übertragungsnetzwerk 20 verwendeten Übertragungsprotokolls.

In Figur 1 sind die ersten, zweiten, vierten und achten Kommunikationsschnittstellen 31, 32, 34, 38 jeweils Netzwerkkarten eines Personalcomputers. Die dritten und fünften Kommunikationsschnittstellen 33 und 35 sind ebenso wie die neunte Kommunikationsschnittstelle 39 Netzwerkkarten von Servern. Die sechsten und siebten Kommunikationsschnittstelle 36 und 37 sind jeweils mit einer entsprechenden ersten Schnittstelle 61 der zugehörigen sechsten Netzwerkkomponente 16 verbundene WLAN-Karten. Die Kommunikationsschnittstellen können in Abhängigkeit von einem verwendeten Übertragungsnetzwerk beispielsweise auch ISDN-Modem oder ähnliches sein.

In Figur 1 sind die erste, zweite, dritte und sechste Netzwerkkomponente 11, 12, 13 und 16 von den zugeordneten Kommunikationsschnittstellen separate Vorrichtungen, die in einer Leitung zwischen der jeweiligen Kommunikationsschnittstelle 31, 32, 33, 36 und 37 und dem Übertragungsnetzwerk 20 dazwischengeschaltet sind. Die vierte und fünfte Netzwerkkomponente 14 und 15 ist hingegen jeweils fest in eine zugeordnete vierte bzw. fünfte Kommunikationsschnittstelle 34 und 35 integriert. Dies kann beispielsweise in Form einer PCI-Bus-Karte oder direkt auf dem Mainboard des entsprechenden Computers erfolgen.

Jede Netzwerkkomponente weist eine erste Speichereinrichtung 41 auf, in der wenigstens ein vorgegebener Kodierschlüssel gespeichert ist. In Figur 1 sind in der ersten Speichereinrichtung 41 der ersten und zweiten Netzwerkkomponente 11 und 12 jeweils die Kodierschlüssel K1 und K3 gespeichert. In der ersten Speichereinrichtung 41 der dritten Netzwerkkomponente sind die Kodierschlüssel K1 und K2 gespeichert. In der ersten Speichereinrichtung 41 der vierten Netzwerkkomponente 14 ist der Kodierschlüssel K3, in der ersten Speichereinrichtung 41 der fünften Netzwerkkomponente 15 sind die Kodierschlüssel K1, K2 und K3 und in der ersten Speichereinrichtung 41 der sechsten Netzwerkkomponente ist der Kodierschlüssel K1 gespeichert.

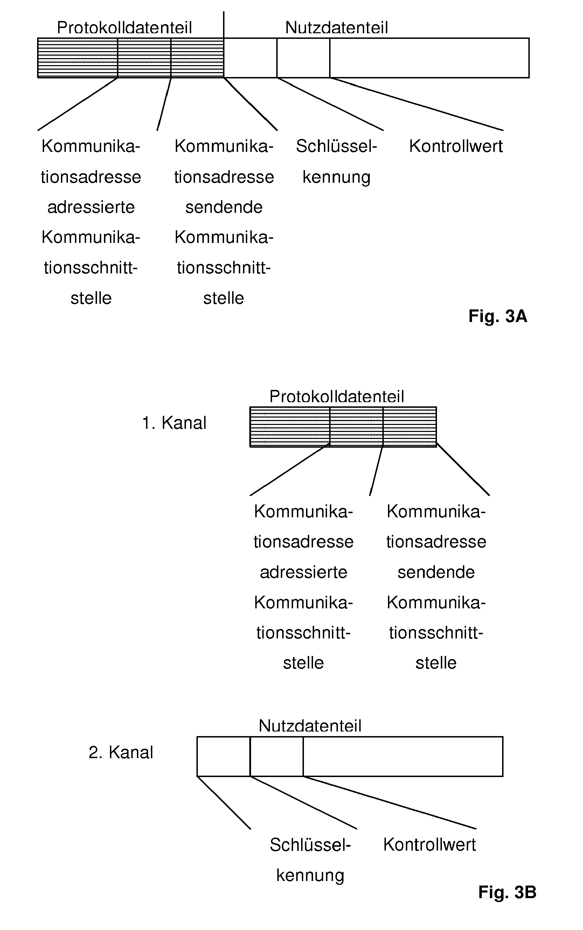

In Figur 3A ist schematisch der Aufbau von in dem Übertragungsnetzwerk 20 übertragenen Daten gezeigt.

Wie ersichtlich, weisen die Daten ein Protokolldatenteil und ein Nutzdatenteil auf. Der Protokolldatenteil hängt von einem in dem Übertragungsnetzwerk 20 jeweils verwendeten Übertragungsprotokoll ab und enthält unter anderem die Kommunikationsadresse einer adressierten Kommunikationsschnittstelle 31-39 und die Kommunikationsadresse der sendenden Kommunikationsschnittstelle 31-39. Um eine Übertragung über das Übertragungsnetzwerk 20 zu ermöglichen, ist der Protokolldatenteil immer unverschlüsselt, d.h. lediglich gemäß eines im Übertragungsnetzwerk 20 verwendeten Übertragungsprotokolls codiert.

Der Nutzdatenteil kann verschlüsselt oder unverschlüsselt sein und enthält neben den Nutzdaten in dem gezeigten Beispiel einen Kontrollwert, der sich aus den Nutzdaten berechnet und die Feststellung erlaubt, ob der Nutzdatenteil vollständig und fehlerfrei ist. Bevorzugt ermöglicht der Kontrollwert auch eine Korrektur eines fehlerhaften Nutzdatenteils. Sind die Nutzdaten verschlüsselt, enthält der Nutzdatenteil in der gezeigten Ausführungsform zudem eine unverschlüsselte Schlüsselkennung, welche einen für die Verschlüsselung verwendeten Kodierschlüssel K1, K2, K3 kennzeichnet.

Die in Figur 3A gezeigten Daten können in dem Übertragungsnetzwerk 20 aus Figur 1 übertragen werden, welches einen gemeinsamen Kanal für die zu übertragenden Daten verwendet.

Figur 3B zeigt hingegen den Aufbau von Daten, wie sie in einem Datennetzwerk verwendet werden können, welches verschiedene Kanäle zum Übertragen eines Protokolldatenteils und eines Nutzdatenteils der zu übertragenden Daten verwendet. Dies ist beispielsweise in ISDN-Netzwerken der Fall, in denen der Protokolldatenteil über einen ersten Kanal und der Nutzdatenteil über einen zweiten Kanal übertragen wird.

Der Aufbau des Protokolldatenteils und des Nutzdatenteils entspricht jeweils dem von Figur 3A. Es wird betont, dass die vorliegende Erfindung jedoch nicht auf den in den Figuren 3A und 3B gezeigten Datenaufbau beschränkt ist.

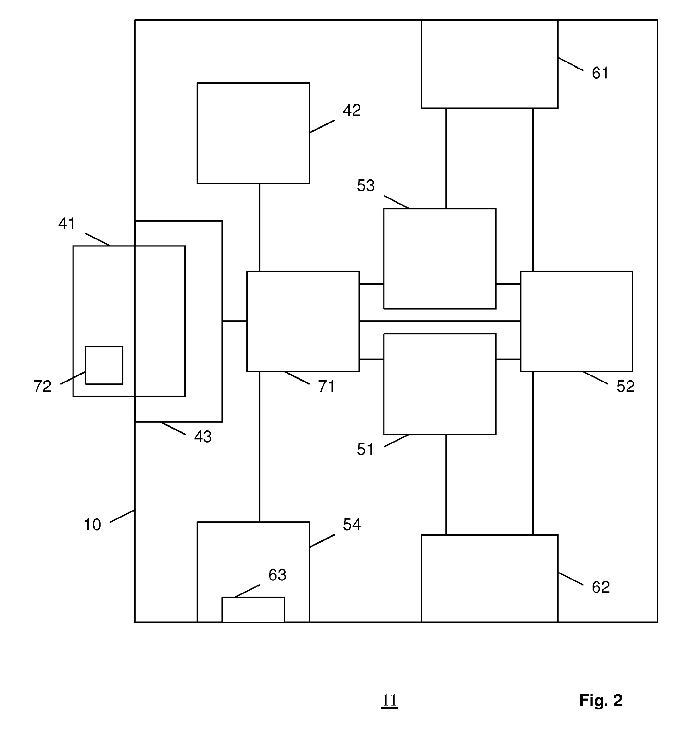

In Figur 2 ist schematisch der Aufbau einer der in Figur 1 verwendeten Netzwerkkomponenten 11-16 gemäß der bevorzugten Ausführungsform schematisch gezeigt.

Die in Figur 2 gezeigte erste Netzwerkkomponente 11 weist neben der ersten Schnittstelle 61 und der zweiten Schnittstelle 62 eine Speicherschnittstelle 43, einen Entschlüsseler 51, einen Datenselektor 52, ein Verschlüsseler 53, eine zweite Speichereinrichtung 42, ein erstes Identifizierungssystem 71 sowie eine Managementeinrichtung 54 mit einer dritten Schnittstelle 63 auf. Altnernativ kann die Managementeinrichtung auch keine eigene Schnittstelle aufweisen und stattdessen auf die Schnittstelle 62 zugreifen.

Weiter weist die Netzwerkkomponente 11 in Figur 2 nicht gezeigte Hilfssysteme wie z. B. eine Stromversorgung und ein Display oder eine oder mehrere Kontrolllampen zur Anzeige eines Betriebszustandes auf. Den in Figur 2 gezeigten Komponenten der Netzwerkkomponente 11 kann auch ein zusätzlicher Controller überlagert sein. Die Komponenten sind über Datenleitungen miteinander verbunden. werden von einem Gehäuse 10 aufgenommen.

Die erste Speichereinrichtung 41 ist in dem gezeigten Beispiel kein fester Bestandteil der Netzwerkkomponente 11, sondern mit dieser über die Speicherschnittstelle lösbar verbindbar. In die erste Speichereinrichtung 41 ist ein zweites Identifizierungssystem 72 integriert.

Bei dem Entschlüsseler 51, dem Datenselektor 52, dem Verschlüsseler 53, dem ersten Identifizierungssystem 71 sowie dem zweiten Identifizierungssystem 72 handelt es sich jeweils um programmtechnisch in geeigneter Weise eingerichtete Mikroprozessoren. Diese Mikroprozessoren weisen ein Betriebssystem auf, das von einem Betriebssystem der zugeordneten ersten Kommunikationsschnittstelle 31 verschieden ist.

In Figur 2 sind die ersten und zweiten Schnittstellen 61, 62 jeweils Ethernet-Schnittstellen.

Alternativ kann die erste Schnittstellen 61 beispielsweise auch eine PCMCIA Schnittstelle oder ähnliches und die zweite Schnittstellen 62 eine WLAN oder ISDN-Schnittstelle oder ähnliches sein. Es ist lediglich erforderlich, dass die erste Schnittstelle 61 eine Verbindung zur zugeordneten Kommunikationsschnittstelle 31 und die zweite Schnittstelle 62 eine Verbindung zum Übertragungsnetzwerk 20 ermöglicht.

Über die erste Schnittstelle 61 und die zweite Schnittstelle 62 empfängt bzw. sendet die Netzwerkkomponente 11 Daten zu/von der zugeordneten ersten Kommunikationsschnittstelle 31 bzw. dem Übertragungsnetzwerk 20.

Dabei ist die Netzwerkkomponente 11 so ausgebildet, dass die Kommunikationsadresse der zugeordneten ersten Kommunikationsschnittstelle 31 (Netzwerkkarte des Personalcomputers) für das Übertragungsnetzwerk 20 sichtbar ist und die von der ersten Kommunikationsschnittstelle 31 ausgegebenen Daten zuvor so verarbeitet werden, dass auch die verarbeiteten Daten entsprechend des von dem Übertragungsnetzwerk 20 verwendeten Protokolls codiert sind.

In der gezeigten Ausführungsform ist die erste Speichereinrichtung 41 ein wechselbares nichtflüchtiges Speichermedium in Form eines USB-Token 41. Entsprechend ist die Speicherschnittstelle 43 eine USB-Schnittstelle 43 für den USB-Token 41 auf. Alternativ kann die erste Speichereinrichtung 41 jedoch beispielsweise eine Diskette, eine Compact Disc CD, eine Digital Versatile Disc DVD, eine Chipkarte oder eine Magnetkarte und die Speicherschnittstelle entsprechend angepasst sein.

Das in den USB-Token 41 integrierte zweite Identifizierungssystem 72 dient zur Feststellung der Identität eines Benutzers und weist einen (nicht gezeigten) Sensor zur Erfassung biometrischer Daten auf. Das zweite Identifizierungssystem 72 gibt einen Zugriff auf in dem USB-Token 41 gespeicherte Daten nur nach erfolgreicher Identifizierung eines Benutzers frei.

Der USB-Token 41 speichert die vorgegebenen Kodierschlüssel K1 und K3 sowie diese Kodierschlüssel K1, K3 bezeichnende Schlüsselkennungen. Diese Schlüsselkennungen sind von den zur Adressierung einer jeweiligen Kommunikationsschnittstellen 31-37 verwendeten Kommunikationsadressen verschieden. Dabei kann jeder Schlüsselkennung jedoch eine Kommunikationsadresse und/oder eine Speichermedium-Kennung und/oder eine Netzwerkkomponente-Kennung zugeordnet sein. Weiter sind in dem USB-Token zu den Kodierschlüsseln K1, K3 jeweils Metadaten gespeichert, die Informationen über die Art und Weise der Verwendung des jeweiligen Kodierschlüssels K1 und K3 enthalten. Hierfür sind die Metadaten jeweils einer Schlüsselkennung eines Kodierschlüssels K1, K3 zugeordnet. Weiter ist in dem USB-Token eine individuelle Speichermedium-Kennung gespeichert.

Wenngleich symmetrische Kodierschlüssel bevorzugt werden, können auch asymmetrische Kodierschlüssel verwendet werden.

Die zweite Speichereinrichtung 42 ist ein in die Netzwerkkomponente 11 dauerhaft integrierter, nichtflüchtiger Speicher, in dem Spezifikationen von in dem Übertragungsnetzwerk 20 des Kommunikationsnetzwerks 1 verwendeten Übertragungsprotokolle gespeichert sind. Weiter ist der Netzwerkkomponente 11 eine individuelle Netzwerkkomponente-Kennung zugewiesen, die in der zweiten Speichereinrichtung 42 gespeichert ist. In der gezeigten Ausführungsform ist die zweite Speichereinrichtung 42 ein FLASH-Speicher.

Alternativ oder zusätzlich können in der zweiten Speichereinrichtung 42 auch Kodierschlüssel und diese kennzeichnende Schlüsselkennungen gespeichert sein. Dies ermöglicht einen autonomen Betrieb der erfindungsgemäßen Netzwerkkomponente. In diesem Fall kann die erste Speichereinrichtung auch völlig in die zweite Speichereinrichtung integriert sein.

Der Verschlüsseler 53 ist zum Verschlüsseln von Daten ausgebildet, die von der zugeordneten ersten Kommunikationsschnittstelle 31 über die erste Schnittstelle 61 empfangenen werden. Dabei verwendet der Verschlüsseler 53 einen der in der ersten und/oder zweiten Speichereinrichtung 41 gespeicherten Kodierschlüssel K1, K3.

Vor einer Verschlüsselung liest der Verschlüsseler 53 über die USB-Schnittstelle 43 aus dem USB-Token 41 eine Speichermedium-Kennung und aus der zweiten Speichereinrichtung 42 eine Netzwerkkomponente-Kennung aus und fügt diese wahlweise den zu verschlüsselnden Daten bei. Weiter berechnet der Verschlüsseler 53, vor einer Verschlüsselung automatisch einen Kontrollwert für die zu verschlüsselnden Daten und fügt den berechneten Kontrollwert den zu verschlüsselnden Daten bei.

Um einen für einen Datenaustausch geeigneten Kodierschlüssel K1, K3 auszuwählen, liest der Verschlüsseler 53 aus der zweiten Speichereinrichtung 42 Spezifikationen von Übertragungsprotokollen aus und detektiert in den zu verschlüsselnden Daten unter Verwendung der Spezifikationen automatisch einen lediglich auf das jeweilige verwendete Übertragungsprotokoll zurückzuführenden Protokolldatenteil und einen die übrigen Daten enthaltenden Nutzdatenteil. In dem Protokolldatenteil identifiziert der Verschlüsseler 53 automatisch eine zur Adressierung einer jeweiligen adressierten Kommunikationsschnittstelle 32-37 verwendete Kommunikationsadresse und sucht in der ersten Speichereinrichtung 41 eine dieser Kommunikationsadresse zugeordnete Schlüsselkennung. Ist in der ersten Speichereinrichtung 41 eine dieser Kommunikationsadresse zugeordnete Schlüsselkennung gespeichert, so verschlüsselt der Verschlüsseler 53 den Nutzdatenteil unter Verwendung des dieser Schlüsselkennung zugeordneten Kodierschlüssels K1 bzw. K3 und fügt dem verschlüsselten Nutzdatenteil automatisch die jeweilige Schlüsselkennung des verwendeten Kodierschlüssels K1, K3 unverschlüsselt bei.

Um zu verhindern, dass die von dem Verschlüsseler 53 verwendeten Kodierschlüssel K1, K2, K3 durch Analyse verschlüsselter Daten ermittelt werden können, fügt der Verschlüsseler 53 den zu verschlüsselnden Nutzdaten in einem Datenbereich des Nutzdatenteils automatisch Zufallsdaten hinzu, die mit verschlüsselt werden. Der mit den Zufallsdaten gefüllte Datenbereich wird von dem Verschlüsseler 53 vor der Verschlüsselung in dem Nutzdatenteil kenntlich gemacht. Durch das Hinzufügen von Zufallszahlen wird sichergestellt, dass identische Daten, welche mit dem gleichen Kodierschlüssel und dem gleichen Verschlüsselungsalgorithmus verschlüsselt werden gleichwohl zu unterschiedlichen verschlüsselten Daten führen. Eine Ermittlung des verwendeten Kodierschlüssels durch Analyse verschlüsselter Daten ist so nicht oder nur sehr schwer möglich.

Nach einer Verschlüsselung kann der Verschlüsseler 53 den verschlüsselten Nutzdaten wahlweise die ausgelesene Speichermedium-Kennung und Netzwerkkomponente-Kennung unverschlüsselt beifügen. Weiter bildet der Verschlüsseler 53 unter Verwendung der ausgelesenen Spezifikationen und des detektierten Protokolldatenteils automatisch einen neuen Protokolldatenteil für den verschlüsselten Nutzdatenteil. Hierbei verwendet der Verschlüsseler 53 die identifizierte Kommunikationsadresse der adressierten Kommunikationsschnittstelle 32-37 und bildet den neuen Protokolldatenteil für den verschlüsselten Nutzdatenteil unter Beibehaltung der identifizierten Kommunikationsadresse.

Wenn in der ersten Speichereinrichtung 41 keine der Kommunikationsadresse zugeordnete Schlüsselkennung gespeichert ist, sendet der Verschlüsseler 53 über die zweite Schnittstelle 62 und das Übertragungsnetzwerk 20 an eine jeweilige adressierte Kommunikationsschnittstelle 32-37 automatisch unverschlüsselte Nutzdaten, die alle in der ersten Speichereinrichtung 41 gespeicherten Schlüsselkennungen angeben.

Können für eine Verschlüsselung wahlweise verschiedene Kodierschlüssel verwendet werden, so verwendet der Verschlüsseler 53 automatisch den in dem USB-Token 41 gespeicherten Kodierschlüssel K1, K3, der die sicherste Verschlüsselung verspricht (z.B. der längste Kodierschlüssel).

Der Entschlüsseler 51 ist zum Entschlüsseln von über die zweite Schnittstelle 62 von dem Übertragungsnetzwerk 20 empfangenen verschlüsselten Daten ausgebildet. Hierfür liest der Entschlüsseler 51 aus der zweiten Speichereinrichtung 42 Spezifikationen von Übertragungsprotokollen aus und detektiert in den verschlüsselten Daten unter Verwendung der Spezifikationen einen unverschlüsselten Protokolldatenteil und einen verschlüsselten Nutzdatenteil. Weiter identifiziert der Entschlüsseler 51 in den empfangenen verschlüsselten Daten automatisch die Schlüsselkennung, welche den für die Verschlüsselung verwendeten Kodierschlüssel K1, K2, K3 kennzeichnet. Anschließend entschlüsselt der Entschlüsseler 51 den verschlüsselten Nutzdatenteil mittels des wenigstens einen Kodierschlüssels K1, K3, der von der identifizierten Schlüsselkennung gekennzeichnet wird.

Weiter ist der Entschlüsseler 51 ausgebildet, in den verschlüsselten Daten oder den entschlüsselten Daten automatisch einen Kontrollwert zu identifizieren, eine Prüfsumme für die mittels des wenigstens einen Kodierschlüssels K1, K3 entschlüsselten Daten zu berechnen und die Prüfsumme mit dem Kontrollwert zu vergleichen. Stimmt die Prüfsumme mit dem Kontrollwert überein, identifiziert der Entschlüsseler 51 in dem detektierten Protokolldatenteil automatisch eine in dem Übertragungsnetzwerk 20 zur Adressierung einer jeweiligen sendenden Kommunikationsschnittstelle 32-37 verwendete Kommunikationsadresse und ordnet diese Kommunikationsadresse der in dem USB-Token gespeicherten Schlüsselkennung des für die Entschlüsselung verwendeten Kodierschlüssel K1, K3 zu. Wahlweise kann der Entschlüsseler 51 in dem detektierten Nutzdatenteil auch eine Speichermedium-Kennung und Netzwerkkomponente-Kennung auslesen und der Schlüsselkennung des verwendeten Kodierschlüssels K1, K3 zusätzlich zuordnen.

Weiter detektiert der Entschlüsseler 51 in dem detektierten Protokolldatenteil automatisch eine in dem Übertragungsnetzwerk 20 zur Adressierung einer jeweiligen adressierten Kommunikationsschnittstelle 32-37 verwendete Kommunikationsadresse und den bildet einen neuen Protokolldatenteil für den entschlüsselten Nutzdatenteil unter Beibehaltung der detektierten Kommunikationsadresse.

Kann in den empfangenen verschlüsselten Daten keine Schlüsselinformation identifiziert werden, identifiziert der Entschlüsseler 51 in dem detektierten Protokolldatenteil automatisch die zur Adressierung einer jeweiligen sendenden Kommunikationsschnittstelle 32-37 verwendete Kommunikationsadresse oder in dem detektierten Nutzdatenteil eine Speichermedium-Kennung oder Netzwerkkomponente-Kennung und sucht in dem USB-Token oder internem Speicher 42 eine dieser Kommunikationsadresse bzw. Speichermedium-Kennung oder Netzwerkkomponente-Kennung zugeordnete Schlüsselkennung. Ist eine zugeordnete Schlüsselkennung vorhanden, verwendet der Entschlüsseler 51 den entsprechenden Kodierschlüssel K1, K3 zur Entschlüsselung des Nutzdatenteils der verschlüsselten Daten.

Alternativ kann der Entschlüsseler 51 auch eine Entschlüsselung mit allen in dem USB-Token 41 oder internem Speicher 42 gespeicherten Kodierschlüsseln ausprobieren.

Erhält der Entschlüsseler 51 über die zweite Schnittstelle 62 von dem Übertragungsnetzwerk 20 hingegen unverschlüsselte Nutzdaten, die mehrere Schlüsselkennungen angeben, so vergleicht der Entschlüsseler 51 automatisch die angegebenen Schlüsselkennungen mit allen in dem USB-Token 41 oder internem Speicher 42 gespeicherten Schlüsselkennungen und identifiziert in dem den empfangenen Nutzdaten zugehörigen detektierten Protokolldatenteil die zur Adressierung einer jeweiligen sendenden Kommunikationsschnittstelle 32-37 verwendete Kommunikationsadresse. Anschließend sendet der Entschlüsseler 51 über die zweite Schnittstelle 62 und das Übertragungsnetzwerk 20 an die jeweilige sendende Kommunikationsschnittstelle 32-37 unverschlüsselte Nutzdaten, die alle gemeinsamen Schlüsselkennungen und wahlweise die Speichermedium-Kennung des USB-Token 41 und/oder die Netzwerkkomponente-Kennung der Netzwerkkomponente 11 enthalten.

Erhält der Entschlüsseler 51 über die zweite Schnittstelle 62 von dem Übertragungsnetzwerk 20 unverschlüsselte Nutzdaten, die gemeinsame Schlüsselkennungen angeben, so identifiziert der Entschlüsseler 51 automatisch in dem den empfangenen Nutzdaten zugehörigen Protokolldatenteil die zur Adressierung einer jeweiligen sendenden Kommunikationsschnittstelle 32-37 verwendete Kommunikationsadresse und ordnet sie den in dem USB-Token 41 gespeicherten gemeinsamen Schlüsselkennungen zu. Wahlweise kann der Entschlüsseler 51 in dem detektierten Nutzdatenteil auch eine Speichermedium-Kennung und Netzwerkkomponente-Kennung auslesen und den in dem USB-Token 41 gespeicherten gemeinsamen Schlüsselkennungen zuordnen.

Der Datenselektor 52 dient zum wahlweise Übertragen von Daten zwischen dem Übertragungsnetzwerk 20 und der zugeordneten ersten Kommunikationsschnittstelle 31. Hierfür ist der Datenselektor 52 mit den ersten und zweiten Schnittstellen 61 und 62, dem Verschlüsseler 53, dem Entschlüsseler 51 und dem ersten Identifizierungssystem 71 verbunden.

Der Datenselektor 52 verhindert automatisch eine Weiterleitung von über die zweite Schnittstelle 62 empfangenen verschlüsselten Daten an die erste Kommunikationsschnittstelle 31, wenn die verschlüsselten Daten nicht durch den Entschlüsseler 51 mittels des wenigstens einen Kodierschlüssels K1 K3 entschlüsselbar sind. Entsprechend leitet der Datenselektor 52 verschlüsselte Daten nach einer erfolgreichen Entschlüsselung durch den Entschlüsseler 51 automatisch an die zugeordnete erste Kommunikationsschnittstelle 31 weiter. Ob eine Entschlüsselung erfolgreich war, wird von dem Datenselektor 52 durch Vergleich der von dem Entschlüsseler 51 aus dem entschlüsselten Nutzdaten berechneten Prüfsumme mit dem von dem Entschlüsseler 51 in den entschlüsselten Daten detektierten Kontrollwert beurteilt. Für eine erfolgreiche Entschlüsselung müssen Prüfsumme und Kontrollwert übereinstimmen.

Um einen unberechtigten Zugriff eines Dritten auf die zugeordnete erste Kommunikationsschnittstelle 31 wirkungsvoll zu verhindern, unterbindet der Datenselektor 52 generell eine Übertragung von über das Übertragungsnetzwerk 20 empfangenen unverschlüsselten Daten an die erste Kommunikationsschnittstelle 31.

Weiter stellt der Datenselektor 52 sicher, dass von der zugeordneten ersten Kommunikationsschnittstelle 31 empfangene Daten erst nach einer Verschlüsselung durch den Verschlüsseler 53 mittels des wenigstens einen Kodierschlüssels K1 K3 an das Übertragungsnetzwerk 20 ausgegeben werden.

Die Managementeinrichtung 54 erlaubt es, Einstellungen an den Komponenten der Netzwerkkomponente 11 vorzunehmen. Hierfür weist die Managementeinrichtung 54 eine dritte Schnittstelle 63 auf, über welche die Managementeinrichtung 54 zum Austausch von Managementdaten mit dem Übertragungsnetzwerk 20 verbundenen ist, und ist der Managementeinrichtung 54 eine über das Übertragungsnetzwerk 20 adressierbare Kommunikationsadresse zugeordnet. Die Kommunikationsadresse der Managementeinrichtung 54 ist von der Kommunikationsadresse der zugeordneten ersten Kommunikationsschnittstelle 31 verschieden. Auf diese Weise können Statusüberwachungen sowie Wartungsarbeiten an der erfindungsgemäßen Netzwerkkomponente 11 durchgeführt und die Netzwerkkomponente 11 wahlweise ferngesteuert werden. Auch ein Manipulieren der in dem mit der USB-Schnittstelle 43 verbundenen USB-Token 41 und/oder der zweiten Speichereinrichtung 42 gespeicherten Daten ist mittels der Managementeinrichtung 54 möglich. Auf diese Weise kann die Managementeinrichtung 54 die Netzwerkkomponenten 11 wahlweise in einen Auslieferungszustand zurückversetzen (Reset-Funktion). Um dabei eine ausreichende Sicherheit zu gewährleisten, empfängt und sendet die Managementeinrichtung 54 ausschließlich mittels eines speziellen vorgegebenen Kodierschlüssels verschlüsselte Daten. Der speziell vorgegebene Kodierschlüssel der Managementeinrichtung 54 kann direkt in der Managementeinrichtung 54 oder der zweiten Speichereinrichtung 42 gespeichert sein.

Weiter liest die Managementeinrichtung 54 regelmäßig in dem mit der USB-Schnittstelle 43 verbundenen USB-Token 41 gespeicherte Daten aus. Sind in dem USB-Token speziell codierte Management-Befehle gespeichert, so führt die Managementeinrichtung 54 diese Befehle automatisch aus.

Das erste Identifizierungssystem 71 ist fest in die Netzwerkkomponente 11 integriert und dient zur Feststellung der Identität eines Benutzers. Hierfür weist das erste Identifizierungssystem 71 in dem gezeigten Ausführungsbeispiel eine (nicht gezeigte) Tastatur zur Eingabe eines persönlichen Identifizierungscodes auf. Das erste Identifizierungssystem 71 stellt sicher, dass ein Auslesen des mit der USB Schnittstelle 43 verbundenen USB-Token 41 sowie der zweiten Speichereinrichtung 42 nur nach erfolgreicher Identifizierung eines Benutzers erfolgt. Auch ein Zugriff des Managementsystems 54 auf den Entschlüsseler 51, den Datenselektor 52 oder den Verschlüsseler 53 lässt das erste Identifizierungssystem 71 nur nach erfolgreicher Identifizierung zu.

In dem vorstehend beschriebenen, bevorzugten Ausführungsbeispiel wird ein Übertragungsnetzwerk 20 verwendet, bei dem eine Übertragung eines Protokolldatenteils und eines Nutzdatenteils der Daten (wie in Figur 3A gezeigt) gemeinsam erfolgt. Alternativ kann aber auch ein Übertragungsnetzwerk 20 verwendet werden, bei dem eine Übertragung eines Protokolldatenteils und eines Nutzdatenteils der Daten (wie in Figur 3B gezeigt) über unterschiedliche Kanäle erfolgt. In diesem Fall empfangen der Entschlüsseler 51 bzw. der Verschlüsseler 53 über einen ersten Kanal des Übertragungsnetzwerks den unverschlüsselten Protokolldatenteil und über einen zweiten, von dem ersten Kanal des Übertragungsnetzwerks verschiedenen Kanal einen verschlüsselten Nutzdatenteil. Eine Ermittlung von Protokolldatenteil und Nutzdatenteil unter Verwendung einer Spezifikation eines Übertragungsprotokolls ist somit nicht erforderlich. Der Protokolldatenteil und der Nutzdatenteil werden dann von dem Entschlüsseler 51 bzw. dem Verschlüsseler 53 wie vorstehend beschrieben verarbeitet.

In der bevorzugten Ausführungsform sind der Entschlüsseler 51, der Verschlüsseler 53, der Datenselektor 52, das erste Identifizierungssystem 71 und die Managementeinrichtung 54 separate Komponenten. Alternativ können diese Komponenten jedoch in einen gemeinsamen Mikroprozessor integriert sein. In diesem Fall ist ein Betriebsystem des Mikroprozessors bevorzugt unterschiedlich von einem Betriebsystem der zugeordneten Kommunikationsschnittstelle 31.

Weiter sind der Entschlüsseler 51, der Verschlüsseler 53, der Datenselektor 52, das erste Identifizierungssystem 71, die USB-Schnittstelle 43, die zweite Speichereinrichtung 42 und die Managementeinrichtung 54 in der in Figur 2 gezeigten Ausführungsform über individuelle Datenleitungen miteinander verbunden. Alternativ können diese Komponenten der Netzwerkkomponente 11 auch über einem gemeinsamen Datenbus verbunden sein.

Die übrigen Netzwerkkomponenten 12-16 des in Figur 1 gezeigten Kommunikationsnetzwerks 1 weisen den gleichen Aufbau wie die vorstehend beschriebene erste Netzwerkkomponente 11 auf.

Aufgrund der in dem mit der ersten Netzwerkkomponente 11 verbundenen USB-Token 41 gespeicherten vorgegebenen Kodierschlüssel K1 und K3 ist somit ein Datenaustausch mit der zweiten bis siebten Kommunikationsschnittstelle 32-37 möglich, da auch die zugeordneten zweiten bis sechsten Netzwerkkomponenten 12-16 jeweils über einen der Kodierschlüssel K1 und / oder K3 verfügen.

Ein Datenaustausch zwischen der dritten Kommunikationsschnittstelle 33 und der vierten Kommunikationsschnittstelle 34 ist in dem in Figur 1 gezeigten Beispiel jedoch beispielsweise nicht möglich, da die zugeordneten dritten und vierten Netzwerkkomponenten 13 und 14 über keinen gemeinsamen Kodierschlüssel verfügen. Auch ein Datenaustausch mit den achten und neunten Kommunikationsschnittstelle ist nicht möglich, da diese über keine Netzwerkkomponente verfügen und somit keine mit einem vorgegebenen Kodierschlüssel verschlüsselte Daten senden bzw. empfangen können.

Somit überlagern die erfindungsgemäßen Netzwerkkomponenten 11-16 dem Übertragungsnetzwerk 20 ein Netz von verschlüsselten und damit sicheren Datenverbindungen zwischen den Netzwerkkomponenten 11-16 zugeordneten Kommunikationsschnittstellen 31-37. Der Aufbau des Netzes, d. h. die Festlegung, welche Kommunikationsschnittstellen 31-37 miteinander über das Übertragungsnetzwerk 20 Daten austauschen können, hängt dabei alleine von den in den zugeordneten Netzwerkkomponenten 11-16 jeweils gespeicherten Kodierschlüsseln K1, K2, K3 ab. Ein über das Bereitstellen der Kodierschlüssel hinausgehender Eingriff eines Benutzers ist für den Aufbau des Netzes somit nicht erforderlich.

Durch geeignete Verteilung von ersten Speichereinrichtungen 41 mit darin gespeicherten Kodierschlüsseln K1, K2, K3 an zugriffsberechtigte Personen kann der Datenaustausch zwischen den Kommunikationsschnittstellen 31-37 auf besonders einfache, flexible und sichere Weise gesteuert werden. Beispielsweise können in einem Übertragungsnetzwerk 20 so dynamisch Arbeitsgruppen festgelegt werden, die über bestimmte gegenseitige Zugriffsrechte verfügen.

Auch wenn in dem vorstehend beschriebenen Beispiel in den ersten Speichereinrichtungen 41 der Netzwerkkomponenten 11-16 nur ein bis drei Kodierschlüssel K1, K2, K3 gespeichert sind, ist es für den Fachmann offensichtlich, dass eine beliebig große Anzahl von Kodierschlüsseln verwendet werden kann.

Auch ein externer Zugriff auf ein Sekundärnetzwerk kann mittels der erfindungsgemäßen Netzwerkkomponenten 11-16 bereitgestellt werden. Hierfür sind an Zugangspunkten / Einwahlsystemen eines dem Übertragungsnetzwerk entsprechenden Einwahlnetzwerkes erfindungsgemäße Netzwerkkomponenten 11-16 vorgesehen. Jede Netzwerkkomponente 11-16 verfügt über ein wechselbares Speichermedium mit wenigstens einem gespeicherten vorgegebenen Kodierschlüssel. Auch zwischen einem den Zugriff auf das Sekundärnetzwerk ermöglichenden Server und dem Einwahlnetzwerk ist eine erfindungsgemäße Netzwerkkomponente 11-16 mit einem entsprechenden Kodierschlüssel angeordnet. Über die Übereinstimmung der Kodierschlüssel kann so gesteuert werden, welche mit den Netzwerkkomponenten 11-16 verbundenen / verbindbaren Kommunikationsschnittstellen 31-37 Zugriff auf den Server und damit das Sekundärnetzwerk erhalten. Dabei ist bei Auslesen von individuellen Speichermedium-Kennungen der wechselbaren Speichermedien eine Zuordnung des Zugriffs zu einem Benutzer (beispielsweise zu Abrechnungszwecken) möglich.

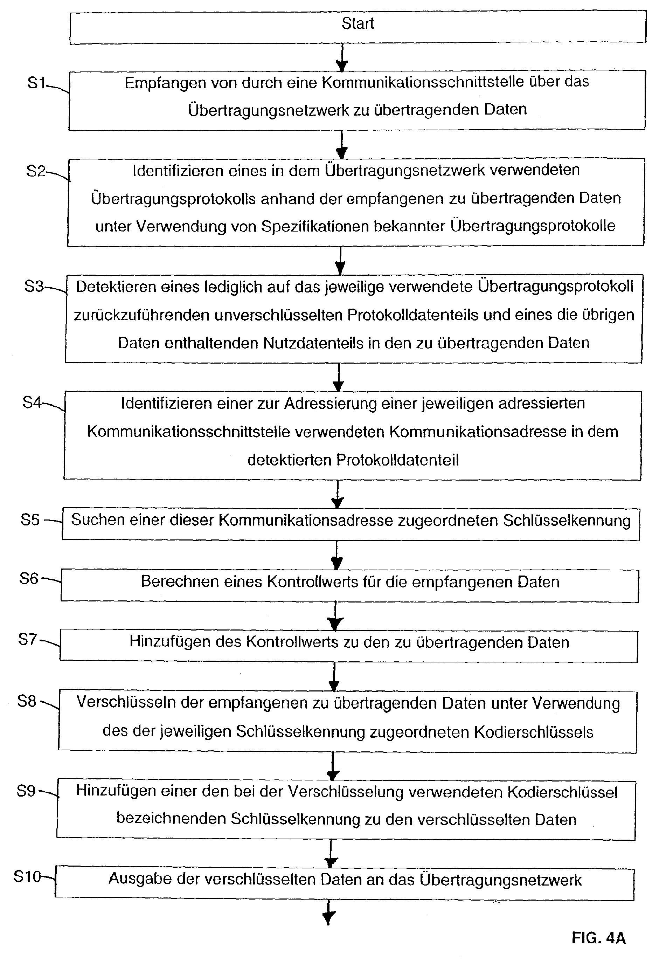

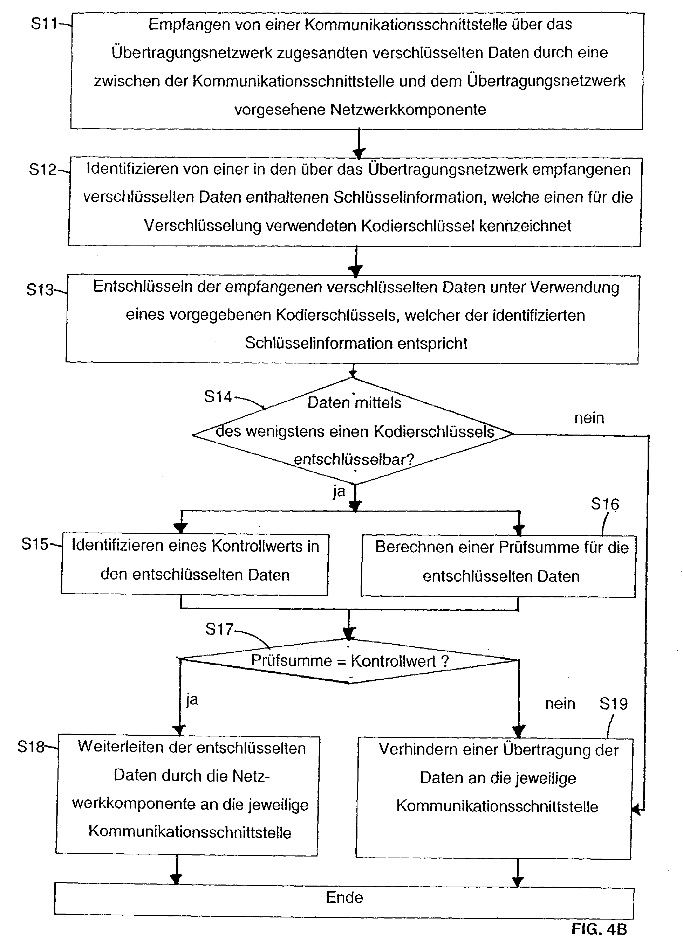

Im Folgenden wird unter Bezugnahme auf die Figuren 4A und 4B eine bevorzugte Ausführungsform des erfindungsgemäßen Verfahrens zur Bereitstellung einer Datenverbindung zwischen wenigstens zwei über ein Übertragungsnetzwerk 20 miteinander verbindbaren Kommunikationsschnittstellen 31, 32, 33, 34, 35, 36, 37 beschrieben.

Dabei wird die Ausführungsform am Beispiel einer Bereitstellung einer Datenverbindung zwischen den beiden in Figur 1 über das Übertragungsnetzwerk 20 miteinander verbundenen zweiten und vierten Kommunikationsschnittstellen 32 und 34 beschrieben. Zwischen den beiden Kommunikationsschnittstellen 32, 34 und dem Übertragungsnetzwerk 20 ist jeweils eine zweite bzw. vierte Netzwerkkomponente 12 bzw. 14 vorgesehen.

Es wird zunächst auf Figur 4A verwiesen.

Zur Bereitstellung einer Datenverbindung gibt die vierte Kommunikationsschnittstelle 34 (beispielsweise in Folge einer Benutzereingabe) Daten aus, welche über das Übertragungsnetzwerk 20 an die zweite Kommunikationsschnittstelle 32 übertragen werden sollen. Dabei kodiert die vierte Kommunikationsschnittstelle 34 die zu übertragenden Daten automatisch so, dass sie einem in dem Übertragungsnetzwerk 20 verwendeten Übertragungsprotokoll entsprechen. Das bedeutet, dass die zu übertragenden Daten in dem Beispiel einen Protokolldatenteil aufweisen, welcher eine Kommunikationsadresse der adressierten zweiten Kommunikationsschnittstelle 32 enthält.

Da die vierte Netzwerkkomponente 14 zwischen der vierten Kommunikationsschnittstelle 34 und dem Übertragungsnetzwerk 20 angeordnet ist, empfängt diese in einem ersten Schritt (S1) von der vierten Kommunikationsschnittstelle 34 die zu übertragenden Daten.

Danach wird automatisch anhand der empfangenen zu übertragenden Daten unter Verwendung von Spezifikationen bekannter Übertragungsprotokolle ein in dem Übertragungsnetzwerk verwendetes Übertragungsprotokoll identifiziert (S2). Dies kann im einfachsten Fall durch Bestimmen einer Paketgröße der Daten erfolgen.

Anschließend wird in den zu übertragenden Daten automatisch ein lediglich auf das verwendete Übertragungsprotokoll zurückzuführender Protokolldatenteil und ein die eigentlichen Nutzdaten enthaltender Nutzdatenteil detektiert (S3).

Danach wird in dem detektierten Protokolldatenteil automatisch eine zur Adressierung der zweiten (adressierten) Kommunikationsschnittstelle 12 verwendete Kommunikationsadresse identifiziert (S4) und eine dieser Kommunikationsadresse zugeordnete Schlüsselkennung gesucht (S5). Dies kann beispielsweise durch Durchsuchen einer Datenbank erfolgen, in welcher Informationen zu in der Vergangenheit erfolgreichen Datenverbindungen gespeichert sind. Im vorliegenden Fall wird angenommen, dass der adressierten Kommunikationsadresse eine Schlüsselkennung zugeordnet ist, die den Kodierschlüssel K3 kennzeichnet.

Anschließend wird automatisch ein Kontrollwert für die zu übertragenden Daten berechnet (S6) und dieser den zu übertragenden Daten hinzugefügt (S7). Der Kontrollwert wird bevorzugt so aus den zu übertragenden Nutzdaten berechnet, dass die Integrität der Daten überprüft werden kann.

Anschließend wird der Nutzdatenteil der zu übertragenden Daten automatisch unter Verwendung des dieser Schlüsselkennung zugeordneten Kodierschlüssels K3 sowie eines bekannten Verschlüsselungsalgorithmus verschlüsselt (S8) und eine den bei der Verschlüsselung verwendeten Kodierschlüssel K3 bezeichnende Schlüsselkennung zu dem verschlüsselten Nutzdatenteil unverschlüsselt hinzugefügt (S9).

Dabei kann das Verfahren gemäß einer alternativen Ausführungsform zusätzlich die Schritte des Identifizieren einer in dem Übertragungsnetzwerk 20 zur Adressierung der sendenden vierten Kommunikationsschnittstelle 34 verwendeten Kommunikationsadresse in dem detektierten Protokolldatenteil und/oder des Identifizieren einer Speichermedium-Kennung oder Netwerkkomponente-Kennung in dem detektierten Nutzdatenteil umfassen. Nach erfolgreicher Identifizierung erfolgt ein Zuordnen der identifizierten Kommunikationsadresse bzw. der identifizierten Speichermedium-Kennung oder Netwerkkomponente-Kennung zu einer Schlüsselkennung, die den für die Entschlüsselung verwendeten Kodierschlüssel K3 bezeichnet. Hierdurch kann auch bei einer zeitlich späteren Bereitstellung von Datenverbindungen zwischen den beiden vierten und zweiten Kommunikationsschnittstellen 32, 34 automatisch ein geeigneter Kodierschlüssel K1, K2, K3 für die Verschlüsselung auswählt werden.

Die so verschlüsselten Daten werden automatisch and das Übertragungsnetzwerk 20 ausgegeben (S10).

Dabei umfasst die Ausgabe der entschlüsselten Daten ein automatisches Erstellen eines neuen Protokolldatenteils für den verschlüsselten Nutzdatenteil unter Verwendung der Spezifikation des identifizierten Übertragungsprotokolls und des detektierten Protokolldatenteils, um dem identifizierten Übertragungsprotokoll entsprechende verschlüsselte Daten zu bilden. Dabei wird die detektierte Kommunikationsadresse bei der Bildung des neuen Protokolldatenteils vorzugsweise beibehalten.

Die vorstehenden Verfahrensschritte S1-S10 werden in dem Beispiel durch die vierte Netzwerkkomponente 14 ausgeführt.

Die Daten werden von dem Übertragungsnetzwerk 20 unter Verwendung der Kommunikationsadresse und des jeweiligen Übertragungsprotokolls automatisch zu der zweiten Kommunikationsschnittstelle 32 übertragen. Da die zweite Netzwerkkomponente 12 jedoch zwischen der zweiten Kommunikationsschnittstelle 32 und dem Übertragungsnetzwerk 20 angeordnet ist, empfängt die zweite Kommunikationsschnittstelle 32 die verschlüsselten Daten nicht direkt, sondern über die zweite Netzwerkkomponente 12. Hierfür ist erforderlich, dass die zweite Netzwerkkomponente 12 aus Sicht des Übertragungsnetzwerks 20 transparent ist.

Somit werden in Figur 4B durch die zweite Netzwerkkomponente 12 zunächst verschlüsselte Daten empfangen (S11).

Anschließend wird in den empfangenen verschlüsselten Daten automatisch eine Schlüsselinformation identifiziert (S12). Im vorliegenden Fall handelt es sich bei der Schlüsselinformation um die den verwendeten Kodierschlüssel K3 bezeichnende Schlüsselkennung, welche den verschlüsselten Daten in Schritt (S9) hinzugefügt wurde. Folglich kann die Schlüsselinformation einfach aus den empfangenen verschlüsselten Daten ausgelesen werden.

Wenn die identifizierte Schlüsselinformation einen bekannten Kodierschlüssel K3 kennzeichnet, werden die empfangenen verschlüsselten Daten automatisch unter Verwendung dieses Kodierschlüssels K3 entschlüsselt (S13).

Ist eine solche Schlüsselinformation in den empfangenen verschlüsselten Daten nicht enthalten oder nicht identifizierbar, kann das Verfahren gemäß einer alternativen Ausführungsform weiter die Schritte des Identifizieren einer zur Adressierung einer jeweiligen sendenden (vierten) Kommunikationsschnittstelle 34 verwendeten Kommunikationsadresse in einem unter Verwendung von Spezifikationen von Übertragungsprotokollen detektierten Protokolldatenteil und des Suchen einer dieser Kommunikationsadresse zugeordneten Schlüsselkennung umfassen. Ist dieser Kommunikationsadresse eine Schlüsselkennung zugeordnet, so wird der dieser Schlüsselkennung zugeordneten Kodierschlüssel K3 bei der anschließenden Entschlüsselung der Daten verwendet.

Weiter alternativ können auch alle bekannten Kodierschlüssel ausprobiert werden.

Anschließend wird in Schritt (S14) geprüft, ob die verschlüsselten Daten tatsächlich mittels des Kodierschlüssels K3 entschlüsselt werden konnten.

Ist dies nicht der Fall, so wird eine Übertragung der über das Übertragungsnetzwerk 20 empfangenen Daten an die zweite Kommunikationsschnittstelle automatisch verhindert (S19).

Anderenfalls wird automatisch eine Prüfsumme der entschlüsselten Daten berechnet (S16) und der den empfangenen entschlüsselten Daten zugefügte Kontrollwert identifiziert (S15).

Im folgenden Schritt (S17) wird die Übereinstimmung der berechneten Prüfsumme mit dem in den empfangenen Daten identifizierten Kontrollwert überprüft.

Ist die Übereinstimmung gegeben, werden die entschlüsselten Daten automatisch an die zugeordnete zweite Kommunikationsschnittstelle 34 weitergeleitet (S18) und wird so eine Datenverbindung zwischen der vierten und der zweiten Kommunikationsschnittstelle 14, 12 bereitgestellt.

Dabei umfasst die Weiterleitung der entschlüsselten Daten ein automatisches Erstellen eines neuen Protokolldatenteils für den entschlüsselten Nutzdatenteil unter Verwendung der Spezifikation des identifizierten Übertragungsprotokolls und eines detektierten Protokolldatenteils der zu entschlüsselnden Daten sowie ein Bilden von dem identifizierten Übertragungsprotokoll entsprechenden entschlüsselten Daten aus dem neuen Protokolldatenteil und dem entschlüsselten Nutzdatenteil. Dabei wird bei der Bildung des neuen Protokolldatenteils für den entschlüsselten Nutzdatenteil die detektierte Kommunikationsadresse vorzugsweise beibehalten.

Anderenfalls wird eine Übertragung der über das Übertragungsnetzwerk 20 empfangenen Daten an die zweite Kommunikationsschnittstelle 32 automatisch verhindert (S19).

In dem Beispiel werden die vorstehenden Verfahrensschritte (S11)-(S19) durch die zweite Netzwerkkomponente 12 ausgeführt.

Es wird betont, dass von der vorstehend beschriebenen Reihenfolge der Schritte geeignet abgewichen werden kann. Auch sind einige Schritte wie beispielsweise die Verwendung des Kontrollwertes und die Identifizierung des Übertragungsprotokolls oder der Schlüsselinformation nur fakultativ.

Auch wenn der Kontrollwert vorstehend für die zu verschlüsselnden Daten berechnet und zu den noch unverschlüsselten Daten hinzugefügt wurde, kann der Kontrollwert alternativ zu den Schritten (S6), (S7) auch für die verschlüsselten Daten berechnet und zu den verschlüsselten Daten hinzugefügt werden. Entsprechend kann auch die Identifizierung des Kontrollwertes und die Berechnung der Prüfsumme zwischen den Schritten (S8) und (S10) unter Verwendung der noch verschlüsselten Daten erfolgen.

Weiter kann es vorteilhaft sein, wenn das erfindungsgemäße Verfahren in Schritt (S11) des Empfangens von beispielsweise von der achten oder neunten Kommunikationsschnittstelle 38, 39 über das Übertragungsnetzwerk 20 zugesandten unverschlüsselten Daten durch die zweite Netzwerkkomponente 12 die Schritte des automatischen Erkennens, dass die empfangenen Daten nicht mittels eines vorgegebenen Kodierschlüssels K1, K3 verschlüsselt sind und des Verhinderns einer Übertragung der empfangenen unverschlüsselten Daten an die wenigstens eine zugeordnete zweite Kommunikationsschnittstelle 32 durch die zweite Netzwerkkomponente 12 umfasst.

Um den für die Durchführung des erfindungsgemäßen Verfahrens erforderlichen Aufwand gering zu halten, kann es weiter vorteilhaft sein, wenn in den Schritten (S8) und (S13) ein Entschlüsseln bzw. Verschlüsseln von lediglich dem Nutzdatenteil mittels des wenigstens einen Kodierschlüssels K1, K3 erfolgt.

In dem vorstehend beschriebenen Beispiel der bevorzugten Ausführungsform des erfindungsgemäßen Verfahrens ist davon ausgegangen worden, dass in den Schritten (S2)-(S5) einer zur Adressierung einer jeweiligen adressierten (zweiten) Kommunikationsschnittstelle 32 verwendeten Kommunikationsadresse eine Schlüsselkennung zugeordnet ist, und anhand dieser Schlüsselkennung ein geeigneter Kodierschlüssel K3 für die Verschlüsselung der Daten ermittelt werden kann.

Um auch eine Datenverbindung zu der zweiten Kommunikationsschnittstelle 32 bereitstellen zu können, wenn deren Kommunikationsadresse noch keine Schlüsselkennung zugeordnet ist, weist das Verfahren gemäß eines ersten Ansatzes weiter die Schritte des Verschlüsseln von vorgegebenen Testdaten unter Verwendung eines beliebigen vorgegebenen Kodierschlüssels K3 und des Senden der verschlüsselten Testdaten an die adressierte zweite Kommunikationsschnittstelle 32 auf.

Die Übertragungsprotokolle vieler Übertragungsnetzwerke 20 sehen vor, dass Kommunikationsschnittstellen 31-39 den Empfang von Daten automatisch durch eine über das Übertragungsnetzwerk an die jeweilige sendende Kommunikationsschnittstelle 31-39 übermittelte Empfangsbestätigung quittieren. Ist dies bei einem verwendeten Übertragungsprotokoll nicht der Fall, kann dies auch automatisch durch entsprechend vorgegebene Testdaten veranlasst werden.

Wird eine derartige Empfangsbestätigung in Folge des Sendens der verschlüsselten Testdaten empfangen, so steht fest, dass auch eine der empfangenden (zweiten) Kommunikationsschnittstelle 32 zugeordnete (zweite) Netzwerkkomponente 12 über den zur Verschlüsselung verwendeten Kodierschlüssel K3 verfügt. Dieser Kodierschlüssel K3 kann somit zur Bereitstellung einer Datenverbindung verwendet werden.

Ein zweiter Ansatz zur Bereitstellung einer Datenverbindung, wenn der zur Adressierung der jeweiligen adressierten Kommunikationsschnittstelle 31-37 verwendeten Kommunikationsadresse keine Schlüsselkennung zugeordnet ist, wird im Folgenden beschrieben. In Abwandlung des vorangegangenen Beispiels soll zwischen den in Figur 1 gezeigten ersten sowie sechsten und siebten Kommunikationsschnittstellen 31 sowie 36 und 37 eine Datenverbindung bereitgestellt werden.

In diesem Fall erstellt die erste Netzwerkkomponente 11 der ersten Kommunikationsschnittstelle 31 automatisch unverschlüsselte Nutzdaten, die Schlüsselkennungen angeben, welche die der ersten Netzwerkkomponente 11 bekannten Kodierschlüssel K1 und K3 bezeichnen. Diese unverschlüsselten Nutzdaten werden durch die erste Netzwerkkomponente 11 unter Angabe einer die zugeordnete erste Kommunikationsschnittstelle 31 als Absender identifizierenden Kommunikationsadresse über das Übertragungsnetzwerk 20 an die sechste und siebte Kommunikationsschnittstelle 36 und 37 übermittelt.

Die vor der sechsten und siebten Kommunikationsschnittstelle 36 und 37 angeordnete sechste Netzwerkkomponente 16 empfängt die unverschlüsselten Nutzdaten.

Die sechste Netzwerkkomponente 16 stellt automatisch fest, dass über das Übertragungsnetzwerk 20 unverschlüsselte Nutzdaten empfangen wurden, die mehrere Schlüsselkennungen angeben und vergleicht die angegeben mehreren Schlüsselkennungen der Kodierschlüssel K1, K3 mit der Schlüsselkennung, die den der sechsten Netzwerkkomponente 16 bekannten vorgegebenen Kodierschlüssel K1 bezeichnet. Anschließend identifiziert die sechste Netzwerkkomponente 16 in einem Protokolldatenteil zu den empfangenen unverschlüsselten Nutzdaten automatisch eine zur Adressierung der sendenden ersten Kommunikationsschnittstelle 31 verwendete Kommunikationsadresse und erstellt unverschlüsselte Nutzdaten, welche die gemeinsame Schlüsselkennung des gemeinsamen Kodierschlüssels K1 angeben. Diese unverschlüsselten Nutzdaten werden durch die sechste Netzwerkkomponente 16 unter Angabe von Kommunikationsadressen, welche die zugeordneten sechsten und siebten Kommunikationsschnittstellen 36 und 37 als Absender identifizieren, über das Übertragungsnetzwerk 20 an die erste Kommunikationsschnittstelle 31 übertragen.

Die vor der ersten Kommunikationsschnittstelle 31 angeordnete erste Netzwerkkomponente 11 empfängt die unverschlüsselten Nutzdaten und stellt automatisch fest, dass unverschlüsselte Nutzdaten empfangen wurden, die gemeinsame Schlüsselkennungen angeben. Infolge dessen identifiziert die erste Netzwerkkomponente 11 automatisch die zur Adressierung der sendenden sechsten und siebten Kommunikationsschnittstelle 36 und 37 verwendeten Kommunikationsadressen in dem empfangenen Protokolldatenteil der empfangenen unverschlüsselten Nutzdaten und ordnet den identifizierten Kommunikationsadressen die gemeinsame Schlüsselkennung des gemeinsamen Kodierschlüssels K1 zu. Aufgrund dieser Zuordnung kann zwischen der ersten und der sechsten sowie siebten Kommunikationsschnittstelle 31, 36, 37 eine Datenverbindung bereitgestellt werden.

In der vorstehend beschriebenen, bevorzugten Ausführungsform ist davon ausgegangen worden, dass eine Datenübertragung in dem Übertragungsnetzwerk 20 über einen Kanal mittels Daten erfolgt, welche aus einem Protokolldatenteil und einem Nutzdatenteil bestehen. Das erfindungsgemäße Verfahren ist jedoch auch auf Übertragungsnetzwerke anwendbar, in denen eine Datenübertragung eines Protokolldatenteils und eines Nutzdatenteils getrennt und insbesondere (aber nicht ausschließlich) über unterschiedliche Kanäle des Übertragungsnetzwerks erfolgt.

In diesem Fall weist das erfindungsgemäße Verfahren vorzugsweise die Schritte des Empfangen eines unverschlüsselten Protokolldatenteils über den ersten Kanal, welcher Protokolldatenteil eine in dem jeweiligen Übertragungsnetzwerk zur Adressierung einer jeweiligen Kommunikationsschnittstelle verwendete Kommunikationsadresse angibt und des Empfangen eines verschlüsselten oder unverschlüsselten Nutzdatenteils über den zweiten Kanal, welcher Nutzdatenteil zwischen den Kommunikationsschnittstellen zu übertragende Daten enthält, auf.

Entsprechend kann in dem so empfangenen Protokolldatenteil gezielt eine Kommunikationsadresse einer sendenden und/oder empfangenden Kommunikationsschnittstelle identifiziert werden und in dem vorstehend beschriebenen Verfahren verwendet werden. Entsprechend kann auch nur der über den zweiten Kanal empfangene Nutzdatenteil unter Verwendung des wenigstens einen vorgegebenen Kodierschlüssels entschlüsselt bzw. verschlüsselt werden.

Um die Sicherheit des erfindungsgemäßen Verfahrens zur Bereitstellung einer Datenverbindung weiter zu erhöhen, können zudem Schritte der Feststellung der Identität eines Benutzers und des Vergleichs der festgestellten Identität mit den Identitäten erlaubter Benutzer vorgesehen sein. In diesem Fall werden die Schritte der Entschlüsselung oder Verschlüsselung mittels des wenigstens einen vorgegebenen Kodierschlüssels K1, K2, K3 nur ausgeführt, wenn die festgestellte Identität einem erlaubten Benutzer zugeordnet ist. Auf diese Weise kann das erfindungsgemäße Verfahren sicherstellen, dass die Datenverbindungen nur einem vorgegebenen Benutzerkreis bereitgestellt werden.

Das vorstehend beschriebene erfindungsgemäße Verfahren kann in vorteilhafter Weise mittels der vorstehend beschriebenen, erfindungsgemäßen Netzwerkkomponente 11 in dem vorstehend beschriebenen, erfindungsgemäßen Kommunikationsnetzwerk 1 ausgeführt werden.

Zusammenfassend ermöglichen die erfindungsgemäße Netzwerkkomponente, das erfindungsgemäße Kommunikationsnetzwerk und das erfindungsgemäße Verfahren zur Bereitstellung einer Datenverbindung auf besonders einfache und zuverlässige Weise ohne Benutzereingriff einen sicheren Datenaustausch zwischen wenigstens zwei über ein Übertragungsnetzwerk miteinander verbundenen Kommunikationsschnittstellen. Dabei wird ein Zugriff eines Unberechtigten auf eine mit dem Übertragungsnetzwerk verbundene Kommunikationsschnittstelle über das Übertragungsnetzwerk gleichzeitig erheblich erschwert.

Zusammengefasst stellt die Erfindung also eine Netzwerkkomponente für ein Kommunikationsnetzwerk, ein Kommunikationsnetzwerk sowie ein Verfahren zur Bereitstellung einer Datenverbindung bereit.

Hierbei läßt sich die erfindungsgemäße Netzwerkkomponente durch die folgenden Punkte beschreiben:
1. Netzwerkkomponente für ein Kommunikationsnetzwerk, bei welchem eine Mehrzahl von Kommunikationsschnittstellen zum gegenseitigen Datenaustausch über ein Übertragungsnetzwerk verbunden ist, wobei die Netzwerkkomponente zwischen wenigstens einer zugeordneten Kommunikationsschnittstelle und dem Übertragungsnetzwerk anordbar ist, dadurch gekennzeichnet, dass die Netzwerkkomponente aufweist: eine erste Speichereinrichtung zum Speichern von wenigstens einem vorgegebenen Kodierschlüssel, einen Entschlüsseler zum Entschlüsseln von über das Übertragungsnetzwerk empfangenen verschlüsselten Daten unter Verwendung des gespeicherten wenigstens einen Kodierschlüssels, sowie einen Datenselektor zum wahlweisen Übertragen von Daten zwischen dem Übertragungsnetzwerk und der wenigstens einen zugeordneten Kommunikationsschnittstelle, wobei der Datenselektor ausgebildet ist, eine Übertragung von über das Übertragungsnetzwerk empfangenen verschlüsselten Daten an die wenigstens eine zugeordnete Kommunikationsschnittstelle automatisch zu verhindern, wenn die verschlüsselten Daten durch den Entschlüsseler nicht mittels des wenigstens einen Kodierschlüssels entschlüsselbar sind.
2. Die Netzwerkkomponente nach Punkt 1, wobei der Datenselektor ausgebildet ist, über das Übertragungsnetzwerk empfangene verschlüsselte Daten nach einer Entschlüsselung durch den Entschlüsseler mittels des wenigstens einen Kodierschlüssels automatisch an die wenigstens eine zugeordnete Kommunikationsschnittstelle weiterzuleiten.
3. Die Netzwerkkomponente nach Punkt 1 oder 2, wobei die Netzwerkkomponente eine erste Schnittstelle zur Verbindung der Netzwerkkomponente mit der wenigstens einen zugeordneten Kommunikationsschnittstelle und eine zweite Schnittstelle zum Verbinden der Netzwerkkomponente mit dem Übertragungsnetzwerk aufweist, wobei die erste Schnittstelle mit dem Datenselektor und die zweite Schnittstelle mit dem Entschlüsseler verbunden ist.
4. Die Netzwerkkomponente nach einem der Punkte 1 bis 3, wobei der Entschlüsseler ferner ausgebildet ist, um in über das Übertragungsnetzwerk empfangenen verschlüsselten Daten automatisch eine Schlüsselinformation zu identifizieren, welche einen für die Verschlüsselung verwendeten Kodierschlüssel kennzeichnet.
5. Die Netzwerkkomponente nach Punkt 4, wobei die Schlüsselinformation eine Schlüsselkennung ist, welche den über das Übertragungsnetzwerk empfangenen verschlüsselten Daten unverschlüsselt beigefügt ist.
6. Die Netzwerkkomponente nach Punkt 4 oder 5, wobei den Kommunikationsschnittstellen des Übertragungsnetzwerks zur Adressierung im Rahmen des gegenseitigen Datenaustauschs jeweils eine Kommunikationsadresse zugeordnet ist, und wobei die Schlüsselinformation von den zur Adressierung einer jeweiligen Kommunikationsschnittstellen verwendeten Kommunikationsadresse verschieden ist.
7. Die Netzwerkkomponente nach einem der Punkte 1 bis 6, wobei die Netzwerkkomponente weiter aufweist: einen Verschlüsseler zum Verschlüsseln von von der zugeordneten Kommunikationsschnittstelle empfangenen Daten unter Verwendung des gespeicherten wenigstens einen Kodierschlüssels, wobei der Datenselektor ausgebildet ist, von der zugeordneten Kommunikationsschnittstelle empfangene Daten erst nach einer Verschlüsselung durch den Verschlüsseler mittels des wenigstens einen Kodierschlüssels automatisch an das Übertragungsnetzwerk auszugeben.
8. Die Netzwerkkomponente nach Punkt 7, wobei in der ersten Speichereinrichtung zu dem wenigstens einen vorgegebenen Kodierschlüssel eine den Kodierschlüssel bezeichnende Schlüsselkennung gespeichert ist, und wobei der Verschlüsseler ausgebildet ist, den mittels des wenigstens einen Kodierschlüssels verschlüsselten Daten nach der Verschlüsselung automatisch die jeweilige Schlüsselkennung des verwendeten Kodierschlüssels unverschlüsselt beizufügen.
9. Die Netzwerkkomponente nach einem der Punkte 7 oder 8, wobei der Verschlüsseler ausgebildet ist, um vor einer Verschlüsselung automatisch einen Kontrollwert für die von der zugeordneten Kommunikationsschnittstelle empfangenen zu verschlüsselnden Daten oder bereits verschlüsselte Daten zu berechnen und den berechneten Kontrollwert vor der Verschlüsselung den zu verschlüsselnden Daten oder nach der Verschlüsselung den verschlüsselten Daten beizufügen.
10. Die Netzwerkkomponente nach einem der Punkte 1 bis 9, wobei der Entschlüsseler ausgebildet ist, in den verschlüsselten Daten oder den entschlüsselten Daten automatisch einen Kontrollwert zu identifizieren, eine Prüfsumme für die mittels des wenigstens einen Kodierschlüssels entschlüsselten Daten oder die verschlüsselten Daten zu berechnen und die Prüfsumme mit dem Kontrollwert zu vergleichen, und wobei der Datenselektor ausgebildet ist, eine Übertragung von entschlüsselten Daten an die wenigstens eine zugeordnete Kommunikationsschnittstelle automatisch zu verhindern, wenn die Prüfsumme nicht mit dem Kontrollwert übereinstimmt.
11. Die Netzwerkkomponente nach einem der Punkte 1 bis 10, wobei der Datenselektor ausgebildet ist, eine Übertragung von über das Übertragungsnetzwerk empfangenen unverschlüsselten Daten an die wenigstens eine zugeordnete Kommunikationsschnittstelle automatisch zu verhindern.
12. Die Netzwerkkomponente nach einem der Punkte 1 bis 11, wobei die Netzwerkkomponente eine in die Netzwerkkomponente dauerhaft integrierte zweite Speichereinrichtung aufweist, in der wenigstens eine Spezifikation eines in dem Kommunikationsnetzwerk verwendeten Übertragungsprotokolls gespeichert ist, und wobei der Entschlüsseler ausgebildet ist, in den über das Übertragungsnetzwerk empfangenen verschlüsselten Daten unter Verwendung der gespeicherten Spezifikationen einen lediglich auf das jeweilige verwendete Übertragungsprotokoll zurückzuführenden unverschlüsselten Protokolldatenteil und einen die übrigen Daten enthaltenden verschlüsselten Nutzdatenteil zu detektieren und lediglich den verschlüsselten Nutzdatenteil mittels des wenigstens einen Kodierschlüssels zu entschlüsseln.
13. Die Netzwerkkomponente nach Punkt 12, wobei der Entschlüsseler ausgebildet ist, unter Verwendung der gespeicherten Spezifikationen und des detektierten Protokolldatenteils automatisch einen neuen Protokolldatenteil für den entschlüsselten Nutzdatenteil zu erstellen.
14. Die Netzwerkkomponente nach Punkt 13, wobei der Entschlüsseler ausgebildet ist, in dem detektierten Protokolldatenteil automatisch eine in dem Übertragungsnetzwerk zur Adressierung einer jeweiligen adressierten Kommunikationsschnittstelle verwendete Kommunikationsadresse zu identifizieren und den neuen Protokolldatenteil für den entschlüsselten Nutzdatenteil unter Beibehaltung der detektierten Kommunikationsadresse zu bilden.
15. Die Netzwerkkomponente nach einem der Punkte 1 bis 11, wobei der Entschlüsseler ausgebildet ist, über einen ersten Kanal des Übertragungsnetzwerks einen unverschlüsselten Protokolldatenteil zu empfangen, welcher Protokolldatenteil eine in dem jeweiligen Übertragungsnetzwerk zur Adressierung einer jeweiligen Kommunikationsschnittstelle verwendete Kommunikationsadresse angibt, über einen zweiten, von dem ersten Kanal des Übertragungsnetzwerks verschiedenen Kanal des Übertragungsnetzwerks einen verschlüsselten Nutzdatenteil zu empfangen, welcher Nutzdatenteil zwischen den Kommunikationsschnittstellen zu übertragende Daten enthält, und nur den verschlüsselten Nutzdatenteil mittels des wenigstens einen Kodierschlüssels zu entschlüsseln.
16. Die Netzwerkkomponente nach einem der Punkte 12 bis 15, wobei der Entschlüsseler ausgebildet ist, in dem detektierten oder über den ersten Kanal empfangenen Protokolldatenteil automatisch eine in dem Übertragungsnetzwerk zur Adressierung einer jeweiligen sendenden Kommunikationsschnittstelle verwendete Kommunikationsadresse zu identifizieren und zusammen mit einer Schlüsselkennung, die den für die Entschlüsselung verwendeten Kodierschlüssel bezeichnet, in der ersten und/oder zweiten Speichereinrichtung zu speichern.
17. Die Netzwerkkomponente nach Punkt 16, wobei der Entschlüsseler ausgebildet ist, in dem detektierten oder über den ersten Kanal empfangenen Protokolldatenteil automatisch die zur Adressierung einer jeweiligen sendenden Kommunikationsschnittstelle verwendete Kommunikationsadresse zu identifizieren, in der ersten und / oder zweiten Speichereinrichtung eine dieser Kommunikationsadresse zugeordnete Schlüsselkennung zu suchen oder in dem Nutzdatenteil eine Schlüsselinformation zu identifizieren und bei der Entschlüsselung des verschlüsselten Nutzdatenteils den der jeweiligen Schlüsselkennung bzw. Schlüsselinformation zugeordneten Kodierschlüssel zu verwenden.
18. Die Netzwerkkomponente nach Punkt 16, wobei der Verschlüsseler ausgebildet ist, in dem detektierten oder über den ersten Kanal empfangenen Protokolldatenteil automatisch eine zur Adressierung einer jeweiligen adressierten Kommunikationsschnittstelle verwendete Kommunikationsadresse zu identifizieren, in der ersten und/oder zweiten Speichereinrichtung eine dieser Kommunikationsadresse zugeordnete Schlüsselkennung zu suchen und bei der Verschlüsselung der Daten den der jeweiligen Schlüsselkennung zugeordneten Kodierschlüssel zu verwenden.
19. Die Netzwerkkomponente nach Punkt 18, wobei der Verschlüsseler ausgebildet ist, um automatisch vorgegebene Testdaten unter Verwendung eines beliebigen in der ersten und/oder zweiten Speichereinrichtung gespeicherten vorgegebenen Kodierschlüssels zu verschlüsseln und über das Übertragungsnetzwerk an eine jeweilige adressierte Kommunikationsschnittstelle zu senden, wenn in der ersten und/oder zweiten Speichereinrichtung keine der zur Adressierung der jeweiligen adressierten Kommunikationsschnittstelle verwendeten Kommunikationsadresse zugeordnete Schlüsselkennung gespeichert ist.
20. Die Netzwerkkomponente nach Punkt 18, wobei der Verschlüsseler ausgebildet ist, automatisch unverschlüsselte Nutzdaten, die alle in der ersten und/oder zweiten Speichereinrichtung der Netzwerkkomponente gespeicherten Schlüsselkennungen oder eine Teilmenge davon angeben, über das Übertragungsnetzwerk an eine jeweilige adressierte Kommunikationsschnittstelle zu senden, wenn in der ersten und/oder zweiten Speichereinrichtung keine der zur Adressierung der jeweiligen adressierten Kommunikationsschnittstelle verwendeten Kommunikationsadresse zugeordnete Schlüsselkennung gespeichert ist.
21. Die Netzwerkkomponente nach Punkt 20, wobei der Entschlüsseler ausgebildet ist, um bei Erhalt von unverschlüsselten Nutzdaten über das Übertragungsnetzwerk, die mehrere Schlüsselkennungen angeben, automatisch die angegebenen Schlüsselkennungen mit allen in der ersten und/oder zweiten Speichereinrichtung der Netzwerkkomponente gespeicherten Schlüsselkennungen zu vergleichen, in dem den empfangenen Nutzdaten zugehörigen detektierten oder über den ersten Kanal empfangenen Protokolldatenteil die zur Adressierung einer jeweiligen sendenden Kommunikationsschnittstelle verwendete Kommunikationsadresse zu identifizieren, und über das Übertragungsnetzwerk an die jeweilige sendende Kommunikationsschnittstelle unverschlüsselte Nutzdaten zu senden, die alle gemeinsamen Schlüsselkennungen enthalten.
22. Die Netzwerkkomponente nach Punkt 21, wobei der Entschlüsseler ausgebildet ist, bei Erhalt von unverschlüsselten Nutzdaten über das Übertragungsnetzwerk, die gemeinsame Schlüsselkennungen angeben, automatisch in dem den empfangenen Nutzdaten zugehörigen detektierten oder über den ersten Kanal empfangenen Protokolldatenteil die zur Adressierung einer jeweiligen sendenden Kommunikationsschnittstelle verwendete Kommunikationsadresse zu identifizieren, und zusammen mit den gemeinsamen Schlüsselkennungen in der ersten und/oder zweiten Speichereinrichtung zu speichern.
23. Die Netzwerkkomponente nach einem der Punkte 12 bis 14, wobei der Verschlüsseler ausgebildet ist, in den von der wenigstens einen zugeordneten Kommunikationsschnittstelle empfangenen Daten unter Verwendung der gespeicherten Spezifikationen automatisch einen lediglich auf das jeweilige verwendete Übertragungsprotokoll zurückzuführenden Protokolldatenteil und einen die übrigen Daten enthaltenden Nutzdatenteil zu detektieren und lediglich den Nutzdatenteil mittels des wenigstens einen Kodierschlüssels zu verschlüsseln.
24. Die Netzwerkkomponente nach Punkt 23, wobei der Verschlüsseler ausgebildet ist, unter Verwendung der gespeicherten Spezifikationen und des detektierten Protokolldatenteils automatisch einen neuen Protokolldatenteil für den verschlüsselten Nutzdatenteil zu erstellen.
25. Die Netzwerkkomponente nach Punkt 24, wobei der Verschlüsseler ausgebildet ist, in dem detektierten Protokolldatenteil automatisch eine in dem Übertragungsnetzwerk zur Adressierung einer jeweiligen adressierten Kommunikationsschnittstelle verwendete Kommunikationsadresse zu identifizieren und den neuen Protokolldatenteil für den verschlüsselten Nutzdatenteil unter Beibehaltung der detektierten Kommunikationsadresse zu bilden.
26. Die Netzwerkkomponente nach einem der Punkt 1 bis 25, wobei die erste Speichereinrichtung und/oder die zweite Speichereinrichtung ein in die Netzwerkkomponente dauerhaft integrierter nichtflüchtiger Speicher ist.
27. Die Netzwerkkomponente nach einem der Punkte 1 bis 26, wobei die Netzwerkkomponente eine Managementeinrichtung aufweist, die ausgebildet ist, um Einstellungen an der Netzwerkkomponente vorzunehmen.
28. Die Netzwerkkomponente nach Punkt 27, wobei der Managementeinrichtung eine über das Übertragungsnetzwerk adressierbare Kommunikationsadresse zugeordnet ist und die Managementeinrichtung zum Austausch von Managementdaten mit dem Übertragungsnetzwerk verbundenen ist.
29. Die Netzwerkkomponente nach einem der Punkte 26 bis 28, wobei die Netzwerkkomponente ein erstes Identifizierungssystem zur Feststellung der Identität eines Benutzers aufweist, und wobei das erste Identifizierungssystem ein Auslesen des Speichers und / oder eine Aktivität des Managementsystems nur nach erfolgreicher Identifizierung eines Benutzers zulässt.
30. Die Netzwerkkomponente nach einem der Punkte 1 bis 29, wobei die erste Speichereinrichtung ein wechselbares nichtflüchtiges Speichermedium ist, die Netzwerkkomponente eine Speicherschnittstelle für das wechselbare Speichermedium aufweist, und die zweite Speichereinrichtung ein in die Netzwerkkomponente dauerhaft integrierter nichtflüchtiger Speicher ist.
31. Die Netzwerkkomponente nach Punkt 30, wobei das wechselbare Speichermedium eine Diskette, eine Compact Disc, eine Digital Versatile Disc, eine Chipkarte oder ein USB-Token ist.
32. Die Netzwerkkomponente nach Punkt 30 oder 31, wobei das wechselbare Speichermedium ein zweites Identifizierungssystem zur Feststellung der Identität eines Benutzers aufweist, und
   wobei das zweite Identifizierungssystem ein Auslesen des wechselbaren Speichermediums nur nach erfolgreicher Identifizierung eines Benutzers zulässt.
33. Die Netzwerkkomponente nach einem der Punkte 30 bis 32, wobei dem wechselbaren Speichermedium eine individuelle Speichermedium-Kennung zugewiesen ist und wobei der Verschlüsseler ausgebildet ist, automatisch die Speichermedium-Kennung eines über die Speicherschnittstelle für das wechselbare Speichermedium mit der Netzwerkkomponente verbundenen wechselbaren Speichermediums auszulesen und die ausgelesene Speichermedium-Kennung den zu verschlüsselnden Daten oder den verschlüsselten Daten hinzuzufügen.
34. Die Netzwerkkomponente nach Punkt 29 oder 32, wobei das erste und/oder zweite Identifizierungssystem eine Tastatur zur Eingabe eines persönlichen Identifizierungscodes und/oder einen Sensor zur Erfassung biometrischer Daten aufweist.
35. Die Netzwerkkomponente nach einem der Punkte 7 bis 34, wobei der Netzwerkkomponente eine individuelle Netzwerkkomponente-Kennung zugewiesen ist, und wobei der Verschlüsseler ausgebildet ist, automatisch die Netzwerkkomponente-Kennung auszulesen und den zu verschlüsselnden Daten die Netzwerkkomponente-Kennung der Netzwerkkomponente hinzuzufügen.
36. Die Netzwerkkomponente nach einem der Punkte 1 bis 35, wobei den in der ersten Speichereinrichtung gespeicherten Kodierschlüsseln jeweils Metadaten zugeordnet sind und die Metadaten Informationen über die Art und Weise der Verwendung des jeweiligen Kodierschlüssels enthalten und/oder in der zweiten Speichereinrichtung Metadaten gespeichert sind, die jeweils einer Schlüsselkennung eines Kodierschlüssels zugeordnet sind.
37. Die Netzwerkkomponente nach einem der Punkte 1 bis 36, wobei der Entschlüsseler, der Verschlüsseler, der Datenselektor und vorzugsweise die Managementeinrichtung in einen Mikroprozessor integriert sind.
38. Die Netzwerkkomponente nach Punkt 37, wobei der Mikroprozessor ein Betriebssystem aufweist, das von einem Betriebssystem der wenigstens einen zugeordneten Kommunikationsschnittstelle verschieden ist.
   Das erfindungsgemäße Kommunikationsnetzwerk läßt sich hierbei durch die folgenden Punkte beschreiben:
39. Kommunikationsnetzwerk aufweisend ein einen Datenaustausch ermöglichendes Übertragungsnetzwerk sowie eine Mehrzahl von mit dem Übertragungsnetzwerk verbundenen Kommunikationsschnittstellen wobei die Kommunikationsschnittstellen zum Datenaustausch über das Übertragungsnetzwerk ausgebildet sind, wobei das Kommunikationsnetzwerk weiter wenigstens zwei Netzwerkkomponenten mit den Merkmalen eines der Punkte 1 bis 38 aufweist und die Netzwerkkomponenten jeweils mindestens einer Kommunikationsschnittstelle zugeordnet, sowie zwischen der jeweiligen zugeordneten Kommunikationsschnittstelle und dem Übertragungsnetzwerk angeordnet sind.
40. Das Kommunikationsnetzwerk nach Punkt 39, wobei wenigstens eine der wenigstens zwei Netzwerkkomponenten zwischen einer Mehrzahl von dieser Netzwerkkomponente zugeordneten Kommunikationsschnittstellen und dem Übertragungsnetzwerk angeordnet ist.
41. Das Kommunikationsnetzwerk nach Punkt 39 oder 40, wobei den Kommunikationsschnittstellen des Kommunikationsnetzwerks zur Adressierung im Rahmen des gegenseitigen Datenaustauschs jeweils eine eindeutige Kommunikationsadresse zugewiesen ist, und wobei die Netzwerkkomponenten so ausgebildet sind, dass die jeweilige Kommunikationsadresse der zugeordneten Kommunikationsschnittstelle für das Übertragungsnetzwerk sichtbar ist.
42. Das Kommunikationsnetzwerk nach Punkt 39, 40 oder 41, wobei die Kommunikationsschnittstellen ausgebildet sind, zu übertragende Daten vor einer Ausgabe an die jeweilige zugehörige Netzwerkkomponente gemäß eines von dem Übertragungsnetzwerk verwendeten Übertragungsprotokolls zu codieren, und wobei die Netzwerkkomponenten ausgebildet sind, die von der jeweiligen zugehörigen Kommunikationsschnittstelle empfangenen Daten so zu verarbeiten, dass auch die verarbeiteten Daten entsprechend des von dem Übertragungsnetzwerk verwendeten Protokolls codiert sind.
43. Das Kommunikationsnetzwerk nach einem der Punkte 39 bis 42, wobei jeder Kommunikationsschnittstelle eine Kommunikationsadressen zugeordnet ist, und wobei das Übertragungsnetzwerk Switche und / oder Router aufweist, welche anhand der Kommunikationsadresse gezielt Übertragungswege zwischen den Kommunikationsschnittstellen bereitstellen.
44. Das Kommunikationsnetzwerk nach einem der Punkte 39 bis 43, wobei das Übertragungsnetzwerk zwischen den Kommunikationsschnittstellen eine IEEE802.3 Ethernet Verbindung oder eine IEEE802.11 Wireless-LAN-Verbindung oder eine ISDN-Verbindung oder eine GSM-Verbindung oder eine UMTS-Verbindung oder eine TCP/IP-Verbindung bereitstellt.
45. Das Kommunikationsnetzwerk nach einem der Punkte 39 bis 44, wobei die Netzwerkkomponente eine von der jeweiligen zugeordneten Kommunikationsschnittstelle separate Vorrichtung ist. Das erfindungsgemäße Verfahren zur Bereitstellung einer Datenverbindung läßt sich schließlich durch die folgenden Punkte beschreiben:
46. Verfahren zur Bereitstellung einer Datenverbindung zwischen wenigstens zwei über ein Übertragungsnetzwerk miteinander verbindbaren Kommunikationsschnittstellen, wobei zwischen wenigstens zwei der Kommunikationsschnittstellen und dem Übertragungsnetzwerk jeweils eine Netzwerkkomponente vorgesehen ist, aufweisend die folgenden Schritte: - Empfangen von einer Kommunikationsschnittstelle über das Übertragungsnetzwerk zugesandten verschlüsselten Daten durch die jeweilige Netzwerkkomponente vor Ausgabe der Daten an die jeweilige Kommunikationsschnittstelle; - Entschlüsseln der empfangenen verschlüsselten Daten unter Verwendung wenigstens eines vorgegebenen Kodierschlüssels ; und - Weiterleiten der entschlüsselten Daten durch die Netzwerkkomponente an die jeweilige Kommunikationsschnittstelle zur Bereitstellung einer Datenverbindung, wenn die verschlüsselten Daten mittels des wenigstens einen Kodierschlüssels entschlüsselbar sind.
47. Das Verfahren nach Punkt 46, weiter aufweisend die folgenden Schritte: - Identifizieren von einer in den über das Übertragungsnetzwerk empfangenen verschlüsselten Daten enthaltenen Schlüsselinformation, welche einen für die Verschlüsselung verwendeten Kodierschlüssel kennzeichnet; und - Verwenden desjenigen der vorgegebenen Kodierschlüssel, welcher der identifizierten Schlüsselinformation entspricht, um die Daten zu entschlüsseln.
48. Das Verfahren nach Punkt 46 oder 47, weiter aufweisend die folgenden Schritte: - Verschlüsseln der durch eine Kommunikationsschnittstelle über das Übertragungsnetzwerk zu übertragenden Daten vor einer Ausgabe der Daten an das Übertragungsnetzwerk durch die Netzwerkkomponente unter Verwendung des wenigstens einen vorgegebenen Kodierschlüssels; und - Ausgabe der verschlüsselten Daten an das Übertragungsnetzwerk.
49. Das Verfahren nach Punkt 48, weiter aufweisend folgenden Schritt: - Hinzufügen einer den bei der Verschlüsselung verwendeten Kodierschlüssel bezeichnenden Schlüsselkennung zu den verschlüsselten Daten vor der Ausgabe der verschlüsselten Daten an das Übertragungsnetzwerk.
50. Das Verfahren nach Punkt 48 oder 49, weiter aufweisend folgende Schritte: - Berechnen eines Kontrollwerts für die zu verschlüsselnden Daten oder die verschlüsselten Daten; und - Hinzufügen des Kontrollwerts zu den zu verschlüsselnden Daten vor der Verschlüsselung oder zu den verschlüsselten Daten nach der Verschlüsselung.
51. Das Verfahren nach einem der Punkte 46 bis 50, weiter aufweisend folgende Schritte:- Identifizieren eines Kontrollwerts in den verschlüsselten Daten oder den entschlüsselten Daten; - Berechnen einer Prüfsumme für die mittels des wenigstens einen Kodierschlüssels entschlüsselten Daten oder die verschlüsselten Daten;-Vergleichen der Prüfsumme mit dem Kontrollwert; und - Verhindern einer Übertragung der entschlüsselten Daten an die wenigstens eine zugeordnete Kommunikationsschnittstelle, wenn die Prüfsumme nicht mit dem Kontrollwert übereinstimmt.
52. Das Verfahren nach einem der Punkte 46 bis 50, weiter aufweisend folgende Schritte: - Empfangen von einer Kommunikationsschnittstelle über das Übertragungsnetzwerk zugesandten unverschlüsselten Daten durch die jeweilige Netzwerkkomponente; - Erkennen, dass die empfangenen Daten nicht mittels eines vorgegebenen Kodierschlüssels verschlüsselt sind; und - Verhindern einer Übertragung der empfangenen unverschlüsselten Daten an die wenigstens eine zugeordnete Kommunikationsschnittstelle durch die Netzwerkkomponente.
53. Das Verfahren nach einem der Punkte 46 bis 52, weiter aufweisend folgende Schritte: - Identifizieren eines in dem Übertragungsnetzwerk verwendeten Übertragungsprotokolls anhand der über das Übertragungsnetzwerk empfangenen verschlüsselten Daten unter Verwendung von Spezifikationen bekannter Übertragungsprotokolle; - Detektieren eines lediglich auf das jeweilige verwendete Übertragungsprotokoll zurückzuführenden unverschlüsselten Protokolldatenteils und eines die übrigen Daten enthaltenden verschlüsselten Nutzdatenteils in den empfangenen verschlüsselten Daten; und - Entschlüsseln von lediglich dem verschlüsselten Nutzdatenteil mittels des wenigstens einen Kodierschlüssels.
54. Das Verfahren nach Punkt 53, weiter aufweisend folgende Schritte:- Erstellen eines neuen Protokolldatenteils für den entschlüsselten Nutzdatenteil unter Verwendung der Spezifikation des identifizierten Übertragungsprotokolls und des detektierten Protokolldatenteils; und - Bilden von dem identifizierten Übertragungsprotokoll entsprechenden entschlüsselten Daten aus dem neuen Protokolldatenteil und dem entschlüsselten Nutzdatenteil.
55. Das Verfahren nach Punkt 54, weiter aufweisend folgende Schritte: - Identifizieren einer in dem Übertragungsnetzwerk zur Adressierung einer jeweiligen adressierten Kommunikationsschnittstelle verwendeten Kommunikationsadresse in dem detektierten Protokolldatenteil; und - Bilden des neuen Protokolldatenteils für den entschlüsselten Nutzdatenteil unter Beibehaltung der detektierten Kommunikationsadresse.
56. Das Verfahren nach einem der Punkte 46 bis 52, weiter aufweisend folgende Schritte: - Empfangen eines unverschlüsselten Protokolldatenteils über einen ersten Kanal des Übertragungsnetzwerks, welcher Protokolldatenteil eine in dem jeweiligen Übertragungsnetzwerk zur Adressierung einer jeweiligen Kommunikationsschnittstelle verwendete Kommunikationsadresse angibt; - Empfangen eines verschlüsselten Nutzdatenteils über einen zweiten, von dem ersten Kanal des Übertragungsnetzwerks verschiedenen Kanal des Übertragungsnetzwerks, welcher Nutzdatenteil zwischen den Kommunikationsschnittstellen zu übertragende Daten enthält; wobei nur der über den zweiten Kanal empfangene Nutzdatenteil unter Verwendung des wenigstens einen vorgegebenen Kodierschlüssels entschlüsselt wird.
57. Das Verfahren nach einem der Punkte 53 bis 56, weiter aufweisend folgende Schritte: - Identifizieren einer in dem Übertragungsnetzwerk zur Adressierung einer jeweiligen sendenden Kommunikationsschnittstelle verwendeten Kommunikationsadresse in dem detektierten oder über den ersten Kanal empfangenen Protokolldatenteil; und - Zuordnen der identifizierten Kommunikationsadresse zu einer Schlüsselkennung, die den für die Entschlüsselung verwendeten Kodierschlüssel bezeichnet, nach dem Entschlüsseln des empfangenen Nutzdatenteils.
58. Das Verfahren nach Punkte 57, weiter aufweisend folgende Schritte: - Identifizieren einer zur Adressierung einer jeweiligen sendenden Kommunikationsschnittstelle verwendeten Kommunikationsadresse in dem detektierten oder über den ersten Kanal empfangenen Protokolldatenteil der zu entschlüsselnden Daten; - Identifizieren von einer in den über das Übertragungsnetzwerk empfangenen verschlüsselten Daten enthaltenen Schlüsselinformation, welche einen für die Verschlüsselung verwendeten Kodierschlüssel kennzeichnet oder Suchen einer dieser Kommunikationsadresse zugeordneten Schlüsselkennung; und - Verwenden des der jeweiligen Schlüsselkennung zugeordneten Kodierschlüssels bei der Entschlüsselung der Daten.
59. Das Verfahren nach einem der Punkte 53 bis 55, weiter aufweisend folgende Schritte: - Identifizieren eines in dem Übertragungsnetzwerk verwendeten Übertragungsprotokolls anhand der von der wenigstens einen zugeordneten Kommunikationsschnittstelle empfangenen unverschlüsselten Daten unter Verwendung von Spezifikationen bekannter Übertragungsprotokolle; - Detektieren eines lediglich auf das jeweilige verwendete Übertragungsprotokoll zurückzuführenden Protokolldatenteils und eines die übrigen Daten enthaltenden Nutzdatenteils in den empfangenen Daten; und - Verschlüsseln von lediglich dem Nutzdatenteil mittels des wenigstens einen Kodierschlüssels.
60. Das Verfahren nach Punkt 59, weiter aufweisend folgende Schritte: - Erstellen eines neuen Protokolldatenteils für den verschlüsselten Nutzdatenteil unter Verwendung der Spezifikation des identifizierten Übertragungsprotokolls und des detektierten Protokolldatenteils; und - Bilden von dem identifizierten Übertragungsprotokoll entsprechenden verschlüsselten Daten aus dem neuen Protokolldatenteil und dem verschlüsselten Nutzdatenteil.
61. Das Verfahren nach Punkt 60, weiter aufweisend folgende Schritte: - Identifizieren einer in dem Übertragungsnetzwerk zur Adressierung einer jeweiligen adressierten Kommunikationsschnittstelle verwendeten Kommunikationsadresse in dem detektierten Protokolldatenteil; und - Bilden des neuen Protokolldatenteils für den verschlüsselten Nutzdatenteil unter Beibehaltung der detektierten Kommunikationsadresse.
62. Das Verfahren nach Punkt 57 oder 58, weiter aufweisend folgende Schritte: - Identifizieren einer zur Adressierung einer jeweiligen adressierten Kommunikationsschnittstelle verwendeten Kommunikationsadresse in dem detektierten oder über den ersten Kanal empfangenen Protokolldatenteil; - Suchen einer dieser Kommunikationsadresse zugeordneten Schlüsselkennung; und - Verwendung des der jeweiligen Schlüsselkennung zugeordneten Kodierschlüssels bei der Verschlüsselung.
63. Das Verfahren nach Punkt 62, weiter aufweisend folgende Schritte: - Verschlüsseln von vorgegebenen Testdaten unter Verwendung eines beliebigen vorgegebenen Kodierschlüssels; und - Senden der verschlüsselten Testdaten an eine jeweilige adressierte Kommunikationsschnittstelle; wenn der zur Adressierung der jeweiligen adressierten Kommunikationsschnittstelle verwendeten Kommunikationsadresse keine Schlüsselkennung zugeordnet ist.
64. Das Verfahren nach Punkt 62, weiter aufweisend folgende Schritte: - Erstellen von unverschlüsselten Nutzdaten, die Schlüsselkennungen angeben, welche alle oder eine Teilmenge der vorgegebenen Kodierschlüssel bezeichnen; und - Senden der unverschlüsselten Nutzdaten an eine jeweilige adressierte Kommunikationsschnittstelle; wenn der zur Adressierung der jeweiligen adressierten Kommunikationsschnittstelle verwendeten Kommunikationsadresse keine Schlüsselkennung zugeordnet ist.
65. Das Verfahren nach Punkt 64, weiter aufweisend folgende Schritte: - Feststellen, dass über das Übertragungsnetzwerk unverschlüsselte Nutzdaten empfangen wurden, die mehrere Schlüsselkennungen angeben; - Vergleichen der mehreren Schlüsselkennungen, die in den empfangenen unverschlüsselten Nutzdaten angegeben sind, mit den die vorgegebenen Kodierschlüssel bezeichnenden Schlüsselkennungen; - Identifizieren einer zur Adressierung einer jeweiligen sendenden Kommunikationsschnittstelle verwendeten Kommunikationsadresse in dem detektierten oder über den ersten Kanal empfangenen Protokolldatenteil zu den empfangenen unverschlüsselten Nutzdaten; - Erstellen von unverschlüsselten Nutzdaten, die alle gemeinsamen Schlüsselkennungen angeben; und - Senden der unverschlüsselten Nutzdaten an eine jeweilige sendende Kommunikationsschnittstelle.
66. Das Verfahren nach Punkt 65, weiter aufweisend folgende Schritte: - Feststellen, dass über das Übertragungsnetzwerk unverschlüsselte Nutzdaten empfangen wurden, die gemeinsame Schlüsselkennungen angeben; - Identifizieren einer zur Adressierung einer jeweiligen sendenden Kommunikationsschnittstelle verwendeten Kommunikationsadresse in dem detektierten oder über den ersten Kanal empfangenen Protokolldatenteil zu den empfangenen unverschlüsselten Nutzdaten; und - Zuordnen der identifizierten Kommunikationsadresse zu den gemeinsamen Schlüsselkennungen.
67. Das Verfahren nach einem der Punkte 46 bis 65, weiter aufweisend folgende Schritte: - Feststellung der Identität eines Benutzers; - Vergleich der festgestellten Identität mit den Identitäten erlaubter Benutzer; und - Durchführen einer Entschlüsselung oder Verschlüsselung mittels des wenigstens einen vorgegebenen Kodierschlüssels nur, wenn die festgestellte Identität einem erlaubten Benutzer zugeordnet ist.
68. Das Verfahren nach einem der Punkte 46 bis 67, wobei die beschriebenen Verfahrensschritte mittels einer Netzwerkkomponente nach einem der Punkte 1 bis 38 ausgeführt werden.

## Patentansprüche

1. Netzwerkkomponente (11, 12, 13, 14, 15, 16) für ein Kommunikationsnetzwerk (1), bei welchem eine Mehrzahl von Kommunikationsschnittstellen (31, 32, 33, 34, 35, 36, 37) zum gegenseitigen Datenaustausch über ein Übertragungsnetzwerk (20) verbunden ist,
wobei die Netzwerkkomponente (11, 12, 13, 14, 15, 16) zwischen wenigstens einer zugeordneten Kommunikationsschnittstelle (31-37) und dem Übertragungsnetzwerk (20) anordbar ist,
**dadurch gekennzeichnet, dass** die Netzwerkkomponente (11-16) aufweist:
eine erste Speichereinrichtung (41) zum Speichern von wenigstens einem vorgegebenen Kodierschlüssel (K1, K2, K3),
einen Entschlüsseler (51) zum Entschlüsseln von über das Übertragungsnetzwerk (20) empfangenen verschlüsselten Daten unter Verwendung des gespeicherten wenigstens einen Kodierschlüssels (K1, K2, K3), sowie
einen Datenselektor (52) zum wahlweisen Übertragen von Daten zwischen dem Übertragungsnetzwerk (20) und der wenigstens einen zugeordneten Kommunikationsschnittstelle (31-37),
wobei der Datenselektor (52) ausgebildet ist, eine Übertragung von über das Übertragungsnetzwerk (20) empfangenen verschlüsselten Daten an die wenigstens eine zugeordnete Kommunikationsschnittstelle (31-37) automatisch zu verhindern, wenn die verschlüsselten Daten durch den Entschlüsseler (51) nicht mittels des wenigstens einen Kodierschlüssels (K1, K2, K3) entschlüsselbar sind.

2. Die Netzwerkkomponente (11-16) nach Anspruch 1,
wobei der Datenselektor (52) ausgebildet ist, über das Übertragungsnetzwerk (20) empfangene verschlüsselte Daten nach einer Entschlüsselung durch den Entschlüsseler (51) mittels des wenigstens einen Kodierschlüssels (K1, K2, K3) automatisch an die wenigstens eine zugeordnete Kommunikationsschnittstelle (31-37) weiterzuleiten.

3. Die Netzwerkkomponente (11-16) nach Anspruch 1 oder 2,
wobei die Netzwerkkomponente (11-16) eine erste Schnittstelle (61) zur Verbindung der Netzwerkkomponente (11-16) mit der wenigstens einen zugeordneten Kommunikationsschnittstelle (31-37) und eine zweite Schnittstelle (62) zum Verbinden der Netzwerkkomponente (11-16) mit dem Übertragungsnetzwerk (20) aufweist, wobei die erste Schnittstelle (61) mit dem Datenselektor (52) und die zweite Schnittstelle (62) mit dem Entschlüsseler (51) verbunden ist.

4. Die Netzwerkkomponente (11-16) nach einem der Ansprüche 1 bis 3,
wobei der Entschlüsseler (51) ferner ausgebildet ist, um in über das Übertragungsnetzwerk (20) empfangenen verschlüsselten Daten automatisch eine Schlüsselinformation zu identifizieren, welche einen für die Verschlüsselung verwendeten Kodierschlüssel (K1, K2, K3) kennzeichnet.

5. Die Netzwerkkomponente (11-16) nach einem der Ansprüche 1 bis 4,
wobei die Netzwerkkomponente (11-16) weiter aufweist:
einen Verschlüsseler (53) zum Verschlüsseln von von der zugeordneten Kommunikationsschnittstelle (31-37) empfangenen Daten unter Verwendung des gespeicherten wenigstens einen Kodierschlüssels (K1, K2, K3),
wobei der Datenselektor (52) ausgebildet ist, von der zugeordneten Kommunikationsschnittstelle (31-37) empfangene Daten erst nach einer Verschlüsselung durch den Verschlüsseler (53) mittels des wenigstens einen Kodierschlüssels (K1, K2, K3) automatisch an das Übertragungsnetzwerk (20) auszugeben.

6. Die Netzwerkkomponente (11-16) nach einem der Ansprüche 1 bis 5,
wobei der Entschlüsseler (51) ausgebildet ist, in den verschlüsselten Daten oder den entschlüsselten Daten automatisch einen Kontrollwert zu identifizieren, eine Prüfsumme für die mittels des wenigstens einen Kodierschlüssels (K1, K2, K3) entschlüsselten Daten oder die verschlüsselten Daten zu berechnen und die Prüfsumme mit dem Kontrollwert zu vergleichen, und
wobei der Datenselektor (52) ausgebildet ist, eine Übertragung von entschlüsselten Daten an die wenigstens eine zugeordnete Kommunikationsschnittstelle (31-37) automatisch zu verhindern, wenn die Prüfsumme nicht mit dem Kontrollwert übereinstimmt.

7. Die Netzwerkkomponente (11-16) nach einem der Ansprüche 1 bis 6,
wobei der Datenselektor (52) ausgebildet ist, eine Übertragung von über das Übertragungsnetzwerk (20) empfangenen unverschlüsselten Daten an die wenigstens eine zugeordnete Kommunikationsschnittstelle (31-37) automatisch zu verhindern.

8. Die Netzwerkkomponente (11-16) nach einem der Ansprüche 1 bis 7,
wobei die Netzwerkkomponente (11-16) eine in die Netzwerkkomponente (11-16) dauerhaft integrierte zweite Speichereinrichtung (42) aufweist, in der wenigstens eine Spezifikation eines in dem Kommunikationsnetzwerk (1) verwendeten Übertragungsprotokolls gespeichert ist, und
wobei der Entschlüsseler (51) ausgebildet ist, in den über das Übertragungsnetzwerk (20) empfangenen verschlüsselten Daten unter Verwendung der gespeicherten Spezifikationen einen lediglich auf das jeweilige verwendete Übertragungsprotokoll zurückzuführenden unverschlüsselten Protokolldatenteil und einen die übrigen Daten enthaltenden verschlüsselten Nutzdatenteil zu detektieren und lediglich den verschlüsselten Nutzdatenteil mittels des wenigstens einen Kodierschlüssels (K1, K2, K3) zu entschlüsseln.

9. Die Netzwerkkomponente (11-16) nach Anspruch 8,
wobei der Entschlüsseler (51) ausgebildet ist, unter Verwendung der gespeicherten Spezifikationen und des detektierten Protokolldatenteils automatisch einen neuen Protokolldatenteil für den entschlüsselten Nutzdatenteil zu erstellen.

10. Die Netzwerkkomponente (11-16) nach einem der Ansprüche 1 bis 7, wobei der Entschlüsseler (51) ausgebildet ist,
über einen ersten Kanal des Übertragungsnetzwerks einen unverschlüsselten Protokolldatenteil zu empfangen, welcher Protokolldatenteil eine in dem jeweiligen Übertragungsnetzwerk (20) zur Adressierung einer jeweiligen Kommunikationsschnittstelle (31-37) verwendete Kommunikationsadresse angibt,
über einen zweiten, von dem ersten Kanal des Übertragungsnetzwerks verschiedenen Kanal des Übertragungsnetzwerks einen verschlüsselten Nutzdatenteil zu empfangen, welcher Nutzdatenteil zwischen den Kommunikationsschnittstellen (31-37) zu übertragende Daten enthält, und
nur den verschlüsselten Nutzdatenteil mittels des wenigstens einen Kodierschlüssels (K1, K2, K3) zu entschlüsseln.

11. Die Netzwerkkomponente (11-16) nach einem der Ansprüche 8 bis 10,
wobei der Entschlüsseler (51) ausgebildet ist, in dem detektierten oder über den ersten Kanal empfangenen Protokolldatenteil automatisch eine in dem Übertragungsnetzwerk (20) zur Adressierung einer jeweiligen sendenden Kommunikationsschnittstelle (31-37) verwendete Kommunikationsadresse zu identifizieren und zusammen mit einer Schlüsselkennung, die den für die Entschlüsselung verwendeten Kodierschlüssel (K1, K2, K3) bezeichnet, in der ersten und/oder zweiten Speichereinrichtung (42) zu speichern.

12. Die Netzwerkkomponente (11-16) nach Anspruch 11,
wobei der Entschlüsseler (51) ausgebildet ist, in dem detektierten oder über den ersten Kanal empfangenen Protokolldatenteil automatisch die zur Adressierung einer jeweiligen sendenden Kommunikationsschnittstelle (31-37) verwendete Kommunikationsadresse zu identifizieren, in der ersten und / oder zweiten Speichereinrichtung (42) eine dieser Kommunikationsadresse zugeordnete Schlüsselkennung zu suchen oder in dem Nutzdatenteil eine Schlüsselinformation zu identifizieren und bei der Entschlüsselung des verschlüsselten Nutzdatenteils den der jeweiligen Schlüsselkennung bzw. Schlüsselinformation zugeordneten Kodierschlüssel (K1, K2, K3) zu verwenden.

13. Die Netzwerkkomponente (11-16) nach Anspruch 11,
wobei der Verschlüsseler (53) ausgebildet ist, in dem detektierten oder über den ersten Kanal empfangenen Protokolldatenteil automatisch eine zur Adressierung einer jeweiligen adressierten Kommunikationsschnittstelle (31-37) verwendete Kommunikationsadresse zu identifizieren, in der ersten und/oder zweiten Speichereinrichtung (42) eine dieser Kommunikationsadresse zugeordnete Schlüsselkennung zu suchen und bei der Verschlüsselung der Daten den der jeweiligen Schlüsselkennung zugeordneten Kodierschlüssel (K1, K2, K3) zu verwenden.

14. Die Netzwerkkomponente (11-16) nach einem der Ansprüche 1 bis 13,
wobei die Netzwerkkomponente (11-16) eine Managementeinrichtung (54) aufweist, die ausgebildet ist, um Einstellungen an der Netzwerkkomponente (11-16) vorzunehmen.

15. Die Netzwerkkomponente (11-16) nach Anspruch 14,
wobei die Netzwerkkomponente (11-16) ein erstes Identifizierungssystem (71) zur Feststellung der Identität eines Benutzers aufweist, und
wobei das erstes Identifizierungssystem (71) ein Auslesen des Speichers und / oder eine Aktivität des Managementsystems nur nach erfolgreicher Identifizierung eines Benutzers zulässt.

16. Die Netzwerkkomponente (11-16) nach einem der Ansprüche 1 bis 15,
wobei der Entschlüsseler (51), der Verschlüsseler (53), der Datenselektor (52) und vorzugsweise die Managementeinrichtung (54) in einen Mikroprozessor integriert sind.

17. Die Netzwerkkomponente (11-16) nach Anspruch 16,
wobei der Mikroprozessor ein Betriebssystem aufweist, das von einem Betriebssystem der wenigstens einen zugeordneten Kommunikationsschnittstelle (31-37) verschieden ist.

18. Kommunikationsnetzwerk (1) aufweisend
ein einen Datenaustausch ermöglichendes Übertragungsnetzwerk (20) sowie eine Mehrzahl von mit dem Übertragungsnetzwerk (20) verbundenen Kommunikationsschnittstellen (31, 32, 33, 34, 35, 36, 37),
wobei die Kommunikationsschnittstellen (31-37) zum Datenaustausch über das Übertragungsnetzwerk (20) ausgebildet sind,
wobei das Kommunikationsnetzwerk (1) weiter wenigstens zwei Netzwerkkomponenten (11, 12, 13, 14, 15, 16) mit den Merkmalen eines der Ansprüche 1 bis 17 aufweist und die Netzwerkkomponenten (11-16) jeweils mindestens einer Kommunikationsschnittstelle (31-37) zugeordnet, sowie zwischen der jeweiligen zugeordneten Kommunikationsschnittstelle (31-37) und dem Übertragungsnetzwerk (20) angeordnet sind.

19. Das Kommunikationsnetzwerk (1) nach Anspruch 18,
wobei die Netzwerkkomponente (11-16) eine von der jeweiligen zugeordneten Kommunikationsschnittstelle (31-37) separate Vorrichtung ist.

20. Verfahren zur Bereitstellung einer Datenverbindung zwischen wenigstens zwei über ein Übertragungsnetzwerk (20) miteinander verbindbaren Kommunikationsschnittstellen (31, 32, 33, 34, 35, 36, 37), wobei zwischen wenigstens zwei der Kommunikationsschnittstellen (31-37) und dem Übertragungsnetzwerk (20) jeweils eine Netzwerkkomponente (11, 12, 13, 14, 15, 16) vorgesehen ist, aufweisend die folgenden Schritte:
- (S11) Empfangen von einer Kommunikationsschnittstelle (31-37) über das Übertragungsnetzwerk (20) zugesandten verschlüsselten Daten durch die jeweilige Netzwerkkomponente (11-16) vor Ausgabe der Daten an die jeweilige Kommunikationsschnittstelle (31-37);
- (S13) Entschlüsseln der empfangenen verschlüsselten Daten unter Verwendung wenigstens eines vorgegebenen Kodierschlüssels (K1, K2, K3); und
- (S18) Weiterleiten der entschlüsselten Daten durch die Netzwerkkomponente (11-16) an die jeweilige Kommunikationsschnittstelle (31-37) zur Bereitstellung einer Datenverbindung, wenn die verschlüsselten Daten mittels des wenigstens einen Kodierschlüssels (K1, K2, K3) entschlüsselbar sind.

21. Das Verfahren nach Anspruch 20,
weiter aufweisend die folgenden Schritte:
- (S12) Identifizieren von einer in den über das Übertragungsnetzwerk (20) empfangenen verschlüsselten Daten enthaltenen Schlüsselinformation, welche einen für die Verschlüsselung verwendeten Kodierschlüssel (K1, K2, K3) kennzeichnet; und
- Verwenden desjenigen der vorgegebenen Kodierschlüssel (K1, K2, K3), welcher der identifizierten Schlüsselinformation entspricht, um die Daten zu entschlüsseln.

22. Das Verfahren nach Anspruch 20 oder 21,
weiter aufweisend die folgenden Schritte:
- (S8) Verschlüsseln der durch eine Kommunikationsschnittstelle (31-37) über das Übertragungsnetzwerk (20) zu übertragenden Daten vor einer Ausgabe der Daten an das Übertragungsnetzwerk (20) durch die Netzwerkkomponente unter Verwendung des wenigstens einen vorgegebenen Kodierschlüssels (K1, K2, K3); und
- (S10) Ausgabe der verschlüsselten Daten an das Übertragungsnetzwerk (20).

23. Das Verfahren nach einem der Ansprüche 20 bis 22,
weiter aufweisend folgende Schritte:
- (S15) Identifizieren eines Kontrollwerts in den verschlüsselten Daten oder den entschlüsselten Daten;
- (S16) Berechnen einer Prüfsumme für die mittels des wenigstens einen Kodierschlüssels (K1, K2, K3) entschlüsselten Daten oder die verschlüsselten Daten;
- (S17) Vergleichen der Prüfsumme mit dem Kontrollwert; und
- (S19) Verhindern einer Übertragung der entschlüsselten Daten an die wenigstens eine zugeordnete Kommunikationsschnittstelle (31-37), wenn die Prüfsumme nicht mit dem Kontrollwert übereinstimmt.

24. Das Verfahren nach einem der Ansprüche 20 bis 22,
weiter aufweisend folgende Schritte:
- Empfangen von einer Kommunikationsschnittstelle (31-37) über das Übertragungsnetzwerk (20) zugesandten unverschlüsselten Daten durch die jeweilige Netzwerkkomponente (11-16);
- Erkennen, dass die empfangenen Daten nicht mittels eines vorgegebenen Kodierschlüssels (K1, K2, K3) verschlüsselt sind; und
- Verhindern einer Übertragung der empfangenen unverschlüsselten Daten an die wenigstens eine zugeordnete Kommunikationsschnittstelle (31-37) durch die Netzwerkkomponente (11-16).

25. Das Verfahren nach einem der Ansprüche 20 bis 24,
weiter aufweisend folgende Schritte:
- Identifizieren eines in dem Übertragungsnetzwerk (20) verwendeten Übertragungsprotokolls anhand der über das Übertragungsnetzwerk (20) empfangenen verschlüsselten Daten unter Verwendung von Spezifikationen bekannter Übertragungsprotokolle;
- Detektieren eines lediglich auf das jeweilige verwendete Übertragungsprotokoll zurückzuführenden unverschlüsselten Protokolldatenteils und eines die übrigen Daten enthaltenden verschlüsselten Nutzdatenteils in den empfangenen verschlüsselten Daten; und
- Entschlüsseln von lediglich dem verschlüsselten Nutzdatenteil mittels des wenigstens einen Kodierschlüssels (K1, K2, K3).

26. Das Verfahren nach einem der Ansprüche 20 bis 24,
weiter aufweisend folgende Schritte:
- Empfangen eines unverschlüsselten Protokolldatenteils über einen ersten Kanal des Übertragungsnetzwerks, welcher Protokolldatenteil eine in dem jeweiligen Übertragungsnetzwerk (20) zur Adressierung einer jeweiligen Kommunikationsschnittstelle (31-37) verwendete Kommunikationsadresse angibt;
- Empfangen eines verschlüsselten Nutzdatenteils über einen zweiten, von dem ersten Kanal des Übertragungsnetzwerks verschiedenen Kanal des Übertragungsnetzwerks, welcher Nutzdatenteil zwischen den Kommunikationsschnittstellen (31-37) zu übertragende Daten enthält;
wobei nur der über den zweiten Kanal empfangene Nutzdatenteil unter Verwendung des wenigstens einen vorgegebenen Kodierschlüssels (K1, K2, K3) entschlüsselt wird.

27. Das Verfahren nach einem der Ansprüche 25 oder 26,
weiter aufweisend folgende Schritte:
- Identifizieren einer in dem Übertragungsnetzwerk (20) zur Adressierung einer jeweiligen sendenden Kommunikationsschnittstelle (31-37) verwendeten Kommunikationsadresse in dem detektierten oder über den ersten Kanal empfangenen Protokolldatenteil; und
- Zuordnen der identifizierten Kommunikationsadresse zu einer Schlüsselkennung, die den für die Entschlüsselung verwendeten Kodierschlüssel (K1, K2, K3) bezeichnet, nach dem Entschlüsseln des empfangenen Nutzdatenteils.

28. Das Verfahren nach Anspruch 25,
weiter aufweisend folgende Schritte:
- (S4) Identifizieren eines in dem Übertragungsnetzwerk (20) verwendeten Übertragungsprotokolls anhand der von der wenigstens einen zugeordneten Kommunikationsschnittstelle (31-37) empfangenen unverschlüsselten Daten unter Verwendung von Spezifikationen bekannter Übertragungsprotokolle;
- (S5) Detektieren eines lediglich auf das jeweilige verwendete Übertragungsprotokoll zurückzuführenden Protokolldatenteils und eines die übrigen Daten enthaltenden Nutzdatenteils in den empfangenen Daten; und
- Verschlüsseln von lediglich dem Nutzdatenteil mittels des wenigstens einen Kodierschlüssels (K1, K2, K3) .

29. Das Verfahren nach einem der Ansprüche 20 bis 28,
weiter aufweisend folgende Schritte:
- Feststellung der Identität eines Benutzers;
- Vergleich der festgestellten Identität mit den Identitäten erlaubter Benutzer; und
- Durchführen einer Entschlüsselung oder Verschlüsselung mittels des wenigstens einen vorgegebenen Kodierschlüssels (K1, K2, K3) nur, wenn die festgestellte Identität einem erlaubten Benutzer zugeordnet ist.

30. Das Verfahren nach einem der Ansprüche 20 bis 29,
wobei die beschriebenen Verfahrensschritte mittels einer Netzwerkkomponente nach einem der Ansprüche 1 bis 38 ausgeführt werden.
